# EUROPEAN PATENT SPECIFICATION

(11) **EP 4 128 666 B1**
(45) Date of publication and mention of the grant of the patent: **02.04.2025**
(21) Application number: 20721640.9
(22) Date of filing: 30.04.2020
(51) Int. Cl.: H04L 41/342, H04L 41/40, H04L 41/5051, H04L 43/12, H04L 43/20, H04L 41/046

(54) **NETWORK TRAFFIC CAPTURE**
ERFASSUNG VON NETZWERKVERKEHR
CAPTURE DE TRAFIC RÉSEAU

(30) Priority: 23.03.2020 EP 20382219
(43) Date of publication of application: 08.02.2023
(73) Proprietor: TELEFONAKTIEBOLAGET LM ERICSSON (PUBL), 164 83 Stockholm (SE)
(72) Inventor: MARTINEZ DE LA CRUZ, Pablo, 28045 Madrid (ES); GARCIA MARTIN, Miguel Angel, 28224 Pozuelo de Alarcon (Madrid) (ES)
(74) Representative: Zacco Sweden AB
(86) International application number: PCT/EP2020/062173
(87) International publication number: WO 2021/190771

(56) References cited:
- US-A1- 2018 270 107
- US-B2- 10 484 410

## Description

### Technical Field

The disclosure relates to methods for capturing traffic in a network and for monitoring traffic flows in the network. The disclosure also relates to nodes configured to operate in accordance with the methods.

### Background

The capture of live traffic in a network has become common practice for troubleshooting and monitoring the behaviour of network applications, such as telecommunication nodes.

The process of live traffic capture typically involves several steps. For example, a first step of live traffic capture may involve using network sniffers or traffic capture tools in order to listen in on selected parts of a network, such as kernel network interfaces of network functions, and recording every packet being transmitted through the selected parts of the network. Some commonly used existing traffic capture tools include Wireshark (or, formerly, Ethereal) and tcpdump, among others. The packets that are recorded during traffic capture are usually stored in a file in a local filesystem or transferred over the network to a central collection facility. Packet Capture (PCAP) is an example of a commonly used file format for packets captured using existing traffic capture tools. The recorded packets have an associated timestamp and can be stored in raw format, such that they retain all attributes and original wire format. Usually, by default, all packets that traverse one or more interfaces of the network are captured. However, this can be inconvenient as observation and troubleshooting in a network generally only requires a reduced set of relevant traffic flows to be captured.

In a second step of live traffic capture, PCAP files are typically analysed using protocol analyser tools. These tools can reconstruct the packet flow from a PCAP file and can decode each packet providing human readable information at different layers (e.g. physical layers, network layers, application layers, etc.). Tools such as these can have more sophisticated features, such as resolving internet protocol (IP) addresses and ports to network and protocol names respectively, and decrypting encrypted traffic flows. For the features of these tools to be fully functional, it is required that the input information must be provided in a set of files. For example, Wireshark can use a host name resolution file to resolve IP addresses in the capture file to host names, and a services name resolution file to resolve port number and protocols in the capture file to protocol names. When the captured traffic is protected with transport layer security (TLS), in principle, the traffic analysis tools are not able to decrypt the captured traffic. However, Wireshark can decrypt encrypted flows when the user provides a file with either the private key of one of the parties, or the pre-master secret used to generate the symmetric session key during the TLS handshake.

An issue with the existing troubleshooting and monitoring principles described earlier is that they are designed for monolithic applications and thus do not fit well with cloud native applications. The term cloud native can refer to design and operation principles incorporated into applications that enable the applications to achieve cloud scale, availability and reliability. Examples of cloud native principles include decomposition, scaling, security, and automation. A decomposition principle may involve breaking traditional monolithic applications into microservices that communicate over the network, with independent life-cycle management. A scaling principle may involve increasing and decreasing the number of microservice instances (or replicas) based on traffic demand. A security principle may involve encrypting connections by default as microservices communicate over an untrusted network. An automation principle may involve a way to efficiently achieve operation at scale.

Typically, existing cloud native applications run as containers in a container orchestration platform (which may also be referred to as a container as a service, CaaS), such as Kubernetes. These platforms can be deployed as clusters, which provide a set of nodes that execute the microservices in the containers and offer an application programming interface (API) for interacting with the platform. Microservices are often deployed as a set of containers, which can comprise a main container implementing business logic, and additional containers implementing helper functions. Such helper containers are commonly referred to as sidecars.

In general, a microservice is realized as a set of microservice instances of the same type. Each instance is configured with its own IP address. A service is typically associated to the microservice. A service may group microservice instances together and provide functionality, such as service discovery and load balancing among microservice instances, typically leveraging a virtual IP (VIP) address. 3GPP TS 23.501 defines a fifth generation (5G) system architecture as a service based architecture (SBA). In this 5G system architecture, control plane network functions are based on SBA. It is a general trend in the industry to build these 5G network functions as cloud native applications.

However, as mentioned earlier, the existing troubleshooting and monitoring principles are designed for monolithic applications and thus they do not fit well with cloud native applications. In particular, certain challenges may be encountered when obtaining and analysing traffic captured in cloud native applications. These challenges include traffic flows spanning across several microservices and network hops, the potential of there being a large number of replicas of each microservice, which can complicate the identification of peers involved in traffic flows, and the encryption of traffic can require an extra decryption step in order to be able to inspect the payload.

Currently, it is necessary to navigate across these challenges using manual procedures and these manual procedures can be complex, time consuming, work intensive tasks, which can also be prone to error. As an example, currently, in order to capture a traffic flow spanning several microservice instances, the user must identify a pair of microservice instances that are involved in a signalling flow, determine in which cluster nodes the microservice instances are running, set up a capture tool in each of the nodes of the cluster with a proper capture filter, manually extract private keys and/or pre-master secrets and any needed metadata from the microservice instances and the container orchestration platform runtime data, manually configure the private keys and/or pre-master secrets in the capture and analysis tool, and gather the capture files and all related metadata for analysis.

US 10,484,410 B2 discloses techniques for detecting anomalies in micro-service communications.

### Summary

It is an object of the disclosure to obviate or eliminate at least some of the above-described disadvantages associated with existing techniques.

The invention is as defined in and by the appended claims.

According to an aspect of the disclosure, there is provided a method for capturing traffic in a network. This method is performed by a first entity in response to a first request to initiate a session in which to capture traffic between microservices. The microservices are distributed across a plurality of nodes in the network. The method comprises initiating transmission of a second request towards one or more second entities. The second request is a request that the one or more second entities initiate the session and the second request comprises one or more capture filters generated for use by the one or more second entities to capture the traffic between the microservices.

There is thus provided an advantageous method for capturing traffic in a network. In particular, the method removes from a server user the complexity associated with capturing and analysing (e.g. encrypted) traffic in a distributed, dynamic, and scalable network, such as a container orchestration platform. The method resolves the issues that arise from the manual procedures associated with existing traffic capture methods (e.g. in cloud native applications) to reduce complexity, time consumption, work intensity, errors, etc. This can improve the ease, efficiency, and reliability of traffic capture.

In some embodiments, the method may comprise generating the one or more capture filters for use by the one or more second entities. This avoids the need for manual and error-prone compilation of each of the one or more capture filters for use by the one or more second entities, e.g. in local traffic capture.

In some embodiments, the one or more capture filters may be generated based on data identifying the traffic that is to be captured. This advantageously allows the (e.g. automatic) creation of one or more (e.g. low-level) capture filters (e.g. from service-level session parameters).

In some embodiments, the method may comprise retrieving the data identifying the traffic that is to be captured.

In some embodiments, the first request may comprise the data identifying the traffic to be captured.

In some embodiments, the method may comprise, in response to a change to the data identifying the traffic that is to be captured, updating the one or more capture filters based on the changed data. This advantageously allows a (e.g. an automatic) reconfiguration of the one or more capture filters in response to a change, such as when flows pertaining to a session are added, modified, or removed. This can be the case, for example, where a multimedia session that starts as an audio call between two parties, then adds a third party, and then adds a video stream.

In some embodiments, the method may comprise initiating transmission of the one or more updated capture filters towards the one or more second entities for use by the one or more second entities to capture the traffic between the microservices. This provides a (e.g. an automatic) distribution of one or more updated capture filters to one or more relevant second entities when changes in the session occur.

In some embodiments, the data identifying the traffic to be captured may comprise data identifying the microservices between which the traffic is to be captured, data indicative of the plurality of nodes across which the microservices are distributed, data indicative of one or more ports exposed by the microservices in transmitting the traffic that is to be captured, and/or data indicative of one or more protocols used by the microservices to transmit the traffic that is to be captured.

In some embodiments, the method may comprise identifying the one or more second entities. In this way, an automated process for second entity identification is provided, which requires no human intervention and thus eliminates the need for a tedious and time-consuming operation of manual inspection of traffic flows.

In some embodiments, the method may comprise initiating transmission of a third request towards one or more third entities, wherein the third request may be a request that the one or more third entities monitor traffic flows between the microservices during the session. In this way, the initiation of monitoring traffic flows can be automated.

In some embodiments, the method may comprise, in response to a fourth request to terminate the capture of traffic, acquiring, from one or more second entities, the traffic captured between the microservices during the session. This allows the captured traffic to be stored in a common place, so that all the captured traffic can be correlated and rendered to the user in a simple way.

In some embodiments, the method may comprise initiating transmission of a message, wherein the message comprises information associated with the traffic captured between the microservices during the session.

In some embodiments, the method may comprise generating the information associated with the traffic captured between the microservices during the session.

In some embodiments, the information associated with the traffic captured between the microservices during the session may comprise at least one of the traffic captured between the microservices during the session, one or more keys used to encrypt the traffic captured between the microservices during the session, one or more references or links for downloading the traffic captured between the microservices during the session, information identifying the microservices between which the traffic is captured during the session, information identifying one or more instances of the microservices between which the traffic is captured during the session, and one or more ports exposed by the microservices in transmitting the traffic captured during the session. The information associated with the traffic captured between the microservices allows a variety of advantageous tasks to be carried out, such as the correlation of captured traffic flows, the deciphering of captured traffic flows (e.g. using one or more keys), and a proper rendering for analysis, debugging of technical problems, and acquisition of statistical information pertaining to the captured traffic flows.

In some embodiments, the traffic to be captured during the session may comprise encrypted traffic and the method may comprise acquiring, from one or more third entities, details for decrypting the encrypted data. In this way, the method enables a seamless mechanism for deciphering the captured traffic, e.g. for enabling its proper rendering.

In some embodiments, the details may comprise a private key and/or a pre-master secret key used to encrypt the traffic captured during the session. This advantageously allows the (e.g. automated) retrieval of the key used to encrypt the captured traffic.

According to another aspect of the disclosure, there is provided a first entity. The first entity comprises processing circuitry configured to operate in accordance with the method described earlier in respect of the first entity. The first entity thus provides the advantages discussed earlier in respect of the method performed by the first entity. In some embodiments, the first entity may comprise at least one memory for storing instructions which, when executed by the processing circuitry, cause the first entity to operate in accordance with the method described earlier in respect of the first entity.

According to another aspect of the disclosure, there is provided another method for capturing traffic in a network. The method is performed by a second entity in response to a second request to start a session in which to capture traffic between microservices. The microservices are distributed across a plurality of nodes in the network and the second request comprises one or more capture filters generated for use in capturing the traffic between the microservices. The method comprises initiating transmission of a fifth request to control a tool in one or more of the plurality of nodes using the one or more capture filters to capture the traffic between the microservices.

There is thus provided an advantageous method for capturing traffic in a network. In particular, the method removes from a server user the complexity associated with capturing and analysing (e.g. encrypted) traffic in a distributed, dynamic, and scalable network, such as a container orchestration platform. The method resolves the issues that arise from the manual procedures associated with existing traffic capture methods (e.g. in cloud native applications) to reduce complexity, time consumption, work intensity, errors, etc. This can improve the ease, efficiency, and reliability of traffic capture.

In some embodiments, in response to a fourth request to terminate the session, transmission of a sixth request may be initiated to control the tool in the one or more of the plurality of nodes to terminate the capture of the traffic between the microservices. This sixth request can allow a single point of control, e.g. where the orchestration of start and stop orders to capture traffic can be controlled and further distributed to participating nodes.

In some embodiments, one or more of the plurality of nodes in the network may comprise the second entity. The second entity can thus be deployed within one or more of the nodes where one or more microservices may be executed and can allow the receiving and/or processing of requests from the first entity.

According to another aspect of the disclosure, there is provided a second entity comprising processing circuitry configured to operate in accordance with the method described earlier in respect of the second entity. The second entity thus provides the advantages discussed earlier in respect of the method performed by the second entity. In some embodiments, the second entity may comprise at least one memory for storing instructions which, when executed by the processing circuitry, cause the second entity to operate in accordance with the method described earlier in respect of the second entity.

According to another aspect of the disclosure, which is not claimed, there is provided a method for monitoring traffic flows in a network. The method is performed by a third entity. The method comprises monitoring one or more traffic flows between microservices distributed across a plurality of nodes in the network and between which traffic is to be captured during a session.

There is thus provided an advantageous method for capturing traffic in a network. In particular, the third entity can, for example, receive requests from the second entity for initiating and finishing the traffic capture for a set of traffic flows.

In some aspects of the disclosure, monitoring the one or more traffic flows may be in response to a third request to monitor the one or more traffic flows. In this way, the third entity can receive a request for initiating and finishing the traffic capture according to the specified capture filters.

In some aspects of the disclosure, the traffic to be captured during the session may comprise encrypted traffic and the method may comprise acquiring details for decrypting the encrypted traffic captured during the session. In this way, the captured traffic can later be deciphered.

In some aspects of the disclosure, the details may be acquired from one or more of the microservices.

In some aspects of the disclosure, the method may comprise initiating transmission of a message towards a second entity, wherein the message may comprise the details. This can, for example, allow the second entity to select just the traffic flows in the capture that are relevant for the session.

In some aspects of the disclosure, the details may comprise a private key and/or a pre-master secret key used to encrypt the traffic captured during the session.

In some aspects of the disclosure, the method may comprise detecting establishment of traffic flows between one or more of the microservices. This advantageously alleviates a user of a manual, tedious, and error-prone determination of the microservices that are involved in the session.

In some aspects of the disclosure, the method may comprise, in response to receiving unencrypted traffic from one or more of the microservices, initiating transmission of the traffic towards another one or more of the microservices.

In some aspects of the disclosure, the transmission may be over an encrypted traffic flow.

In some aspects of the disclosure, one or more of the plurality of nodes in the network may comprise the third entity.

According to another aspect of the disclosure, which is not claimed, there is provided a third entity. The third entity comprises processing circuitry configured to operate in accordance with the method described earlier in respect of the third entity. The third entity thus provides the advantages discussed earlier in respect of the method performed by the third entity. In some embodiments, the third entity may comprise at least one memory for storing instructions which, when executed by the processing circuitry, cause the third entity to operate in accordance with the method described earlier in respect of the third entity.

According to another aspect of the disclosure, there is provided a method performed by a system. The method may comprise the method performed by one or more first entities of the system as described earlier, the method performed by one or more second entities of the system as described earlier, and/or the method performed by one or more third entities of the system as described earlier. The method performed by the system thus provides the advantages discussed earlier in respect of the method performed by the first entity, second entity, and/or third entity.

According to another aspect of the disclosure, there is provided a system. The system may comprise one or more first entities as described earlier, one or more second entities as described earlier, and/or one or more third entities as described earlier. The system thus provides the advantages discussed earlier in respect of the method performed by the first entity, second entity, and/or third entity.

According to another aspect of the disclosure, there is provided a computer program comprising instructions which, when executed by processing circuitry, cause the processing circuitry to perform the method described earlier in respect of the first entity, second entity, and/or third entity. The computer program thus provides the advantages discussed earlier in respect of the method performed by the first entity and/or the second entity.

According to another aspect of the disclosure, which is not claimed, there is provided a computer program product, embodied on a non-transitory machine readable medium, comprising instructions which are executable by processing circuitry to cause the processing circuitry to perform the method described earlier in respect of the first entity, second entity, and/or third entity. The computer program product thus provides the advantages discussed earlier in respect of the method performed by the first entity, second entity, and/or third entity.

Therefore, advantageous techniques for capturing and monitoring traffic in a network are provided.

### Brief description of the drawings

For a better understanding of the technique, and to show how it may be put into effect, reference will now be made, by way of example, to the accompanying drawings, in which:
Figure 1 is a block diagram illustrating a first entity according to an embodiment;
Figure 2 is a block diagram illustrating a method performed by a first entity according to an embodiment;
Figure 3 is a block diagram illustrating a second entity according to an embodiment;
Figure 4 is a block diagram illustrating a method performed by a second entity according to an embodiment;
Figure 5 is a block diagram illustrating a third entity according to an aspect;
Figure 6 is a block diagram illustrating a method performed by a third entity according to an aspect;
Figure 7 is a block diagram illustrating a system according to an embodiment;
Figures 8a-b is a signalling diagram illustrating an exchange of signals in a system according to an embodiment;
Figure 9 is a signalling diagram illustrating an exchange of signals in a system according to an embodiment;
Figure 10 is a signalling diagram illustrating an exchange of signals in a system according to an embodiment;
Figures 11a-b is a signalling diagram illustrating an exchange of signals in a system according to an embodiment;
Figure 12 is a block diagram illustrating a first entity according to an embodiment;
Figure 13 is a block diagram illustrating a second entity according to an embodiment; and
Figure 14 is a block diagram illustrating a third entity according to an aspect.

### Detailed Description

As mentioned earlier, advantageous techniques for capturing and monitoring traffic in a network are described herein. Herein, traffic may comprise one or more packets (e.g. one or more data packets and/or any other type of packet), one or more files, and/or any other form of traffic. The techniques are implemented by a first entity, and/or a second entity.

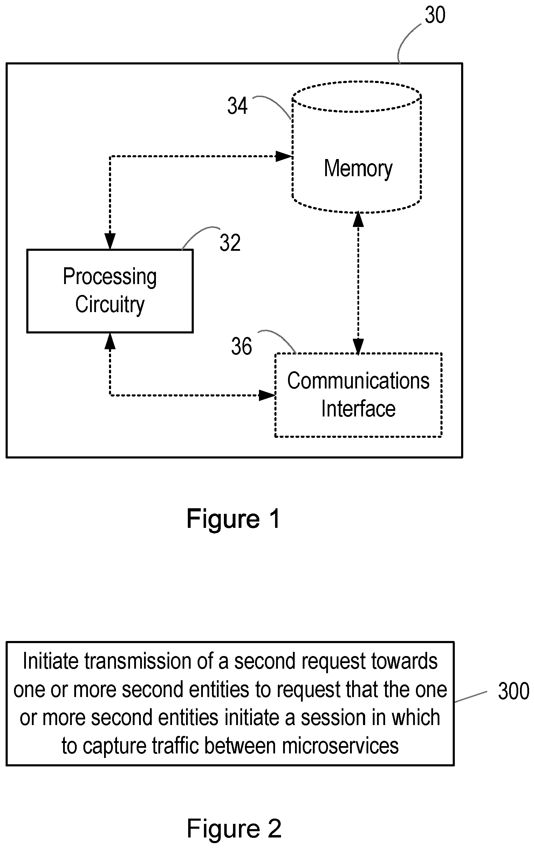

**Figure 1** illustrates a first entity 30 in accordance with an embodiment. The first entity 30 is for use in capturing traffic in a network. The first entity 30 may, for example, be a physical machine (e.g. a server) or a virtual machine (VM). In some embodiments, the first entity 30 may be a controller. The controller may also be referred to herein as a traffic capture controller.

As illustrated in Figure 1, the first entity 30 comprises processing circuitry (or logic) 32. The processing circuitry 32 controls the operation of the first entity 30 and can implement the method described herein in respect of the first entity 30. The processing circuitry 32 can be configured or programmed to control the first entity 30 in the manner described herein. The processing circuitry 32 can comprise one or more hardware components, such as one or more processors, one or more processing units, one or more multi-core processors and/or one or more modules. In particular implementations, each of the one or more hardware components can be configured to perform, or is for performing, individual or multiple steps of the method described herein in respect of the first entity 30. In some embodiments, the processing circuitry 32 can be configured to run software to perform the method described herein in respect of the first entity 30. The software may be containerised according to some embodiments. Thus, in some embodiments, the processing circuitry 32 may be configured to run a container to perform the method described herein in respect of the first entity 30.

Briefly, the processing circuitry 32 of the first entity 30 is configured to, in response to a first request to initiate a session in which to capture traffic between microservices, initiate transmission of a second request towards one or more second entities. The second request is a request that the one or more second entities initiate the session and the second request comprises one or more capture filters generated for use by the one or more second entities to capture the traffic between the microservices. The microservices are distributed across a plurality of nodes in the network.

As illustrated in Figure 1, in some embodiments, the first entity 30 may optionally comprise a memory 34. The memory 34 of the first entity 30 can comprise a volatile memory or a non-volatile memory. In some embodiments, the memory 34 of the first entity 30 may comprise a non-transitory media. Examples of the memory 34 of the first entity 30 include, but are not limited to, a random access memory (RAM), a read only memory (ROM), a mass storage media such as a hard disk, a removable storage media such as a compact disk (CD) or a digital video disk (DVD), and/or any other memory.

The processing circuitry 32 of the first entity 30 can be connected to the memory 34 of the first entity 30. In some embodiments, the memory 34 of the first entity 30 may be for storing program code or instructions which, when executed by the processing circuitry 32 of the first entity 30, cause the first entity 30 to operate in the manner described herein in respect of the first entity 30. For example, in some embodiments, the memory 34 of the first entity 30 may be configured to store program code or instructions that can be executed by the processing circuitry 32 of the first entity 30 to cause the first entity 30 to operate in accordance with the method described herein in respect of the first entity 30. Alternatively or in addition, the memory 34 of the first entity 30 can be configured to store any information, data, messages, requests, responses, indications, notifications, signals, or similar, that are described herein. The processing circuitry 32 of the first entity 30 may be configured to control the memory 34 of the first entity 30 to store information, data, messages, requests, responses, indications, notifications, signals, or similar, that are described herein.

In some embodiments, as illustrated in Figure 1, the first entity 30 may optionally comprise a communications interface 36. The communications interface 36 of the first entity 30 can be connected to the processing circuitry 32 of the first entity 30 and/or the memory 34 of first entity 30. The communications interface 36 of the first entity 30 may be operable to allow the processing circuitry 32 of the first entity 30 to communicate with the memory 34 of the first entity 30 and/or vice versa. Similarly, the communications interface 36 of the first entity 30 may be operable to allow the processing circuitry 32 of the first entity 30 to communicate with a second entity, a third entity, and/or any other entity. The communications interface 36 of the first entity 30 can be configured to transmit and/or receive information, data, messages, requests, responses, indications, notifications, signals, or similar, that are described herein. In some embodiments, the processing circuitry 32 of the first entity 30 may be configured to control the communications interface 36 of the first entity 30 to transmit and/or receive information, data, messages, requests, responses, indications, notifications, signals, or similar, that are described herein.

Although the first entity 30 is illustrated in Figure 1 as comprising a single memory 34, it will be appreciated that the first entity 30 may comprise at least one memory (i.e. a single memory or a plurality of memories) 34 that operate in the manner described herein. Similarly, although the first entity 30 is illustrated in Figure 1 as comprising a single communications interface 36, it will be appreciated that the first entity 30 may comprise at least one communications interface (i.e. a single communications interface or a plurality of communications interface) 36 that operate in the manner described herein. It will also be appreciated that Figure 1 only shows the components required to illustrate an embodiment of the first entity 30 and, in practical implementations, the first entity 30 may comprise additional or alternative components to those shown.

**Figure 2** is a flowchart illustrating a method performed by a first entity 30 in accordance with an embodiment. The method is for capturing traffic in a network. The first entity 30 described earlier with reference to Figure 1 is configured to operate in accordance with the method of Figure 2. The method can be performed by or under the control of the processing circuitry 32 of the first entity 30.

As illustrated at block 300 of Figure 2, in response to a first request to initiate a session in which to capture traffic between microservices, transmission of a second request is initiated towards one or more second entities. More specifically, the processing circuitry 32 of the first entity 30 initiates the transmission of (e.g. itself transmits or causes another entity to transmit) the second request. The second request is a request that the one or more second entities initiate the session and the second request comprises one or more capture filters generated for use by the one or more second entities to capture the traffic between the microservices. The microservices are distributed across a plurality of nodes in the network.

Herein, the one or more capture filters can be any type of filter that can capture the traffic between the microservices. The traffic that is captured can be limited to traffic that matches the one or more capture filters. Thus, the one or more capture filters can be configured to capture relevant traffic pertaining to the requested capture session. For example, the one or more capture filters can be configured to determine the traffic to capture based on predefined criteria. Examples of such criteria include, but are not limited to, any one or more of an identity of microservices between which the traffic is to be captured, an (e.g. IP or MAC) address of the plurality of nodes across which the microservices are distributed (such as an address of a target node for the traffic to be captured and/or an address of a destination node for the traffic to be captured), one or more ports exposed by the microservices in transmitting the traffic that is to be captured, one or more protocols used by the microservices to transmit the traffic that is to be captured, etc. In some embodiments, the one or more filters may be expressed in terms of microservice types.

A cloud native application is made up of several microservice types. For each microservice type, at any given time, a system may manage a variable number of microservices (or microservice instances). It may be of interest for an operator to capture traffic between two given microservice types (e.g. ms A and ms B). This implies that all the traffic initiated from any microservice of type ms A targeted to any microservice of type ms B, and vice versa. Instead of encoding in the one or more filters all the possible combinations of IP addresses of microservice ms A and ms B, the filter may instead refer to "all traffic between ms A and ms B microservices". This can be advantageous when the number of microservices (or microservice instances) change over time, e.g. due to scaling. In some embodiments, the one or more filters can be expressed in terms of names of individual microservices (or microservice instances). A microservice may expose different ports pertaining to different services offered. Port names can be predefined by an application or may be set (e.g. dynamically) at deployment time. In such cases, port numbers can be looked up in a service discovery feature. Analogously, in an advantageous manner, the one or more filters can be expressed in terms of port names directly, without needing to find out the actual port number determined at deployment time.

Although not illustrated in Figure 2, in some embodiments, the method performed by the first entity may comprise generating the one or more capture filters for use by the one or more second entities. More specifically, in some embodiments, the processing circuitry 32 of the first entity 30 can be configured to generate the one or more capture filters for use by the one or more second entities. In some embodiments, the one or more capture filters may be based on data identifying the traffic that is to be captured. The data identifying the traffic that is to be captured may be high-level data (such as high-level network details), whereas the one or more capture filters may identify the traffic that is to be captured using low-level data (such as low-level network details). Thus, in some embodiments, the processing circuitry 32 of the first entity 30 may be configured to translate high-level data into low-level data for the purpose of generating the one or more capture filters. In some embodiments, the one or more capture filters may be expressed in terms of microservice type names, instances, traffic port names and/or the translation to microservice instance 5-tuples.

In some embodiments, the method performed by the first entity 30 may comprise retrieving the data identifying the traffic that is to be captured. More specifically, in some embodiments, the processing circuitry 32 of the first entity 30 can be configured to retrieve the data identifying the traffic to be captured. In some embodiments, the first request to initiate the session in which to capture traffic between microservices may comprise the data identifying the traffic to be captured. Thus, in some embodiments, the data identifying the traffic that is to be captured may be retrieved from the first request.

In some embodiments, the method performed by the first entity 30 may comprise, in response to a change in the data identifying the traffic that is to be captured, updating the one or more capture filters based on the changed data. More specifically, in some embodiments, the processing circuitry 32 of the first entity 30 can be configured to update the one or more capture filters. In some embodiments, the one or more capture filters may be continuously or periodically updated. In some embodiments, the one or more capture filters may be updated based on runtime changes of the plurality of nodes. In some embodiments, the method performed by the first entity 30 may comprise initiating transmission of the one or more updated capture filters towards the one or more second entities for use by the one or more second entities to capture the traffic between the microservices. More specifically, in some embodiments, the processing circuitry 32 of the first entity 30 can be configured to initiate the transmission of (e.g. itself transmit or cause another entity to transmit) the one or more updated capture filters.

In some embodiments, the data identifying the traffic that is to be captured may comprise data identifying the microservices between which the traffic is to be captured, data indicative of the plurality of nodes across which the microservices are distributed, data indicative of one or more ports exposed by the microservices in transmitting the traffic that is to be captured, and/or data indicative of one or more protocols used by the microservices to transmit the traffic that is to be captured. In some embodiments, the data indicative of the plurality of nodes across which the microservices are distributed may comprise one or more internet protocol (IP) addresses or media access control (MAC) addresses of the plurality of nodes across which the microservices are distributed.

Although not illustrated in Figure 2, in some embodiments, the method performed by the first entity 30 may comprise identifying the one or more second entities, e.g. identifying one or more second entities involved in handling the related traffic flows. More specifically, in some embodiments, the processing circuitry 32 of the first entity 30 can be configured to identify the one or more second entities.

Although also not illustrated in Figure 2, in some embodiments, the method performed by the first entity 30 may comprise initiating transmission of a third request towards one or more third entities. The third request is a request that the one or more third entities monitor traffic flow between the microservices during the session. More specifically, in some embodiments, the processing circuitry 32 of the first entity 30 can be configured to initiate the transmission of (e.g. itself transmit or cause another entity to transmit) the third request. In some embodiments, the traffic flow between microservices may comprise one or more connections between the microservices, such as a one or more transmission control protocol (TCP) connections between the microservices, one or more user datagram protocol (UDP) connections between the microservices, and/or any other type of connection(s) between the microservices.

Although also not illustrated in Figure 2, in some embodiments, the method performed by the first entity 30 may comprise, in response to receiving a fourth request to terminate traffic capture, acquiring from the one or more second entities the traffic captured between the microservices during the session. More specifically, the processing circuitry 32 of the first entity 30 can be configured to acquire the traffic captured between microservices.

In some embodiments, the method performed by the first entity 30 may comprise initiating transmission of a message, which comprises information associated with the traffic captured between the microservices during the session. More specifically, the processing circuitry 32 of the first entity 30 can be configured to initiate the transmission of (e.g. itself transmit or cause another entity to transmit) the message. In some embodiments, the method performed by the first entity 30 may comprise generating the information associated with the traffic captured between the microservices during the traffic capture session. More specifically, the processing circuitry 32 of the first entity 30 can be configured to generate this information according to some embodiments.

In some embodiments, at least some (or all) of the information associated with the traffic captured between the microservices during the traffic capture session may be in a human-readable format. In some embodiments, the information associated with the traffic captured between the microservices during the traffic capture session may comprise at least one of the traffic captured between the microservices during the session, one or more keys used to encrypt the traffic captured between the microservices during the session, one or more references or links for downloading the traffic captured between the microservices during the session, information identifying the microservices between which the traffic is captured during the session, information identifying one or more instances of the microservices between which the traffic is captured during the session, and one or more ports exposed by the microservices in transmitting the traffic captured during the session.

In some embodiments, the traffic to be captured during the session may comprise encrypted traffic. In some of these embodiments, the method may comprise acquiring, from one or more third entities, details for decrypting the encrypted traffic. More specifically, the processing circuitry 32 of the first entity 30 can be configured to acquire, from the one or more third entities, the details for decrypting the encrypted traffic. In some embodiments, the details may comprise a private key and/or a pre-master secret key used to encrypt the traffic captured during the session.

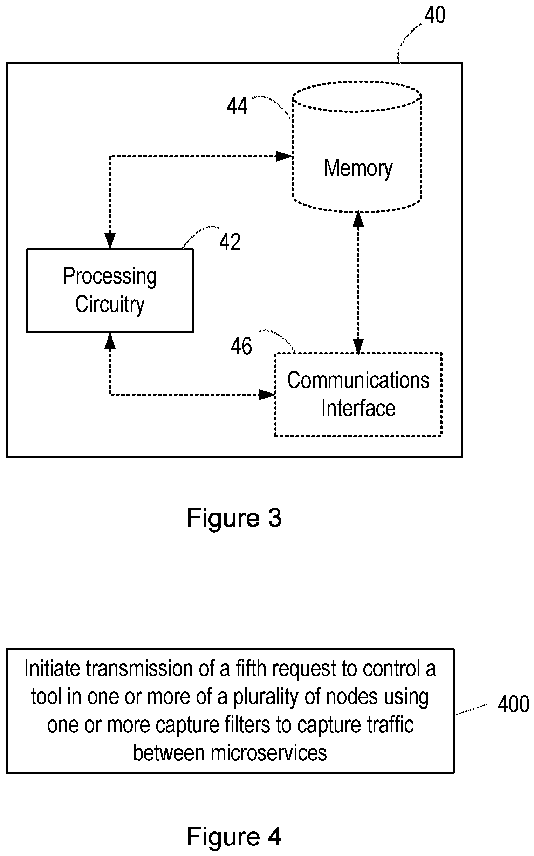

**Figure** 3 illustrates a second entity 40 in accordance with an embodiment. The second entity 40 is for capturing traffic in a network. The second entity 40 may, for example, be a physical machine (e.g. a server) or a virtual machine (VM). In some embodiments, the second entity 40 may be an agent, such as a network agent. The agent may also be referred to herein as a traffic capture agent.

As illustrated in Figure 3, the second entity 40 comprises processing circuitry (or logic) 42. The processing circuitry 42 controls the operation of the second entity 40 and can implement the method described herein in respect of the second entity 40. The processing circuitry 42 can be configured or programmed to control the second entity 40 in the manner described herein. The processing circuitry 42 can comprise one or more hardware components, such as one or more processors, one or more processing units, one or more multi-core processors, and/or one or more modules. In particular implementations, each of the one or more hardware components can be configured to perform, or is for performing, individual or multiple steps of the method described herein in respect of the second entity 40. In some embodiments, the processing circuitry 42 can be configured to run software to perform the method described herein in respect of the second entity 40. The software may be containerised according to some embodiments. Thus, in some embodiments, the processing circuitry 42 may be configured to run a container to perform the method described herein in respect of the second entity 40.

Briefly, the processing circuitry 42 of the second entity 40 is configured to, in response to a second request to start a session in which to capture traffic between microservices, initiate a transmission of a fifth request to control a tool in one or more of the plurality of nodes using one or more capture filters to capture the traffic between the microservices. The microservices are distributed across a plurality of nodes in the network and the second request comprises the one or more capture filters generated for use in capturing the traffic between the microservices.

As illustrated in Figure 3, in some embodiments, the second entity 40 may optionally comprise a memory 44. The memory 44 of the second entity 40 can comprise a volatile memory or a non-volatile memory. In some embodiments, the memory 44 of the second entity 40 may comprise a non-transitory media. Examples of the memory 44 of the second entity 40 include, but are not limited to, a random access memory (RAM), a read only memory (ROM), a mass storage media such as a hard disk, a removable storage media such as a compact disk (CD) or a digital video disk (DVD), and/or any other memory.

The processing circuitry 42 of the second entity 40 can be connected to the memory 44 of the second entity 40. In some embodiments, the memory 44 of the second entity 40 may be for storing program code or instructions which, when executed by the processing circuitry 42 of the second entity 40, cause the second entity 40 to operate in the manner described herein in respect of the second entity 40. For example, in some embodiments, the memory 44 of the second entity 40 may be configured to store program code or instructions that can be executed by the processing circuitry 42 of the second entity 40 to cause the second entity 40 to operate in accordance with the method described herein in respect of the second entity 40. Alternatively or in addition, the memory 44 of the second entity 40 can be configured to store any information, data, messages, requests, responses, indications, notifications, signals, or similar, that are described herein. The processing circuitry 42 of the second entity 40 may be configured to control the memory 44 of the second entity 40 to store information, data, messages, requests, responses, indications, notifications, signals, or similar, that are described herein.

In some embodiments, as illustrated in Figure 3, the second entity 40 may optionally comprise a communications interface 46. The communications interface 46 of the second entity 40 can be connected to the processing circuitry 42 of the second entity 40 and/or the memory 44 of second entity 40. The communications interface 46 of the second entity 40 may be operable to allow the processing circuitry 42 of the second entity 40 to communicate with the memory 44 of the second entity 40 and/or vice versa. Similarly, the communications interface 46 of the second entity 40 may be operable to allow the processing circuitry 42 of the second entity 40 to communicate with the first entity 30, a third entity, and/or any other entity. The communications interface 46 of the second entity 40 can be configured to transmit and/or receive information, data, messages, requests, responses, indications, notifications, signals, or similar, that are described herein. In some embodiments, the processing circuitry 42 of the second entity 40 may be configured to control the communications interface 46 of the second entity 40 to transmit and/or receive information, data, messages, requests, responses, indications, notifications, signals, or similar, that are described herein.

Although the second entity 40 is illustrated in Figure 3 as comprising a single memory 44, it will be appreciated that the second entity 40 may comprise at least one memory (i.e. a single memory or a plurality of memories) 44 that operate in the manner described herein. Similarly, although the second entity 40 is illustrated in Figure 3 as comprising a single communications interface 46, it will be appreciated that the second entity 40 may comprise at least one communications interface (i.e. a single communications interface or a plurality of communications interface) 46 that operate in the manner described herein. It will also be appreciated that Figure 3 only shows the components required to illustrate an embodiment of the second entity 40 and, in practical implementations, the second entity 40 may comprise additional or alternative components to those shown.

**Figure 4** is a flowchart illustrating a method performed by a second entity 40 in accordance with an embodiment. The method is for capturing traffic in a network. The second entity 40 described earlier with reference to Figure 3 is configured to operate in accordance with the method of Figure 4. The method can be performed by or under the control of the processing circuitry 42 of the second entity 40.

As illustrated at block 400 of Figure 4, in response to a second request to start a session in which to capture traffic between microservices, transmission of a fifth request is initiated to control a tool in one or more of a plurality of nodes, using one or more capture filters to capture traffic between the microservices. More specifically, the processing circuitry 42 of the second entity 40 initiates the transmission of (e.g. itself transmits or causes another entity to transmit) the fifth request according to some embodiments. The second request comprises the one or more capture filters generated for use in capturing the traffic between the microservices. The microservices are distributed across a plurality of nodes in the network.

Although not illustrated in Figure 4, in some embodiments, the method performed by the second entity 40 may comprise, in response to a fourth request to terminate the session, initiating transmission of a sixth request to control the tool in the one or more of the plurality of nodes to terminate the capture of traffic between the microservices. More specifically, the processing circuitry 42 of the second entity 40 can be configured to transmit (e.g. itself transmits or causes another entity to transmit) the sixth request according to some embodiments.

In some embodiments, one or more of the plurality of nodes in the network may comprise the second entity 40.

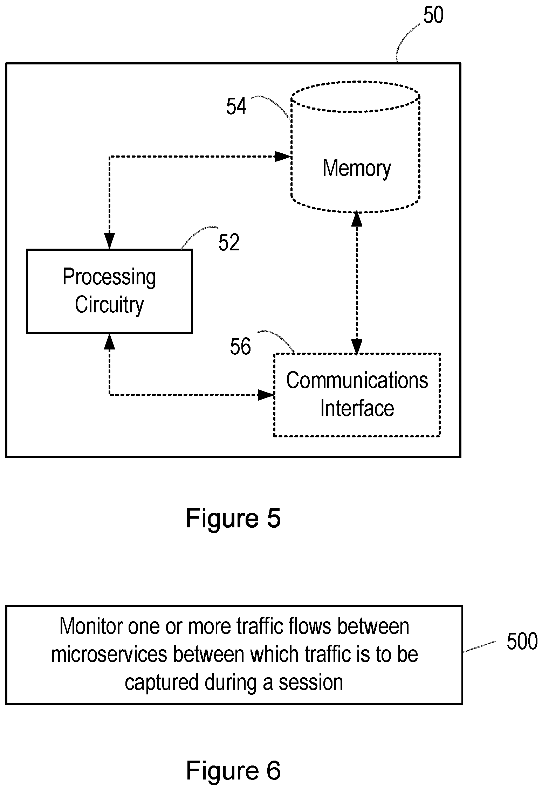

**Figure 5** illustrates a third entity 50 in accordance with an aspect. The third entity 50 is for monitoring traffic flows in a network. The third entity 50 may, for example, be a physical machine (e.g. a server) or a virtual machine (VM). In some embodiments, the third entity 50 may be a sidecar, e.g. that runs in one or more microservices. The sidecar may also be referred to herein as a traffic capture sidecar.

As illustrated in Figure 5, the third entity 50 comprises processing circuitry (or logic) 52. The processing circuitry 52 controls the operation of the third entity 50 and can implement the method described herein in respect of the third entity 50. The processing circuitry 52 can be configured or programmed to control the third entity 50 in the manner described herein. The processing circuitry 52 can comprise one or more hardware components, such as one or more processors, one or more processing units, one or more multi-core processors, and/or one or more modules. In particular implementations, each of the one or more hardware components can be configured to perform, or is for performing, individual or multiple steps of the method described herein in respect of the third entity 50. In some embodiments, the processing circuitry 52 can be configured to run software to perform the method described herein in respect of the third entity 50. The software may be containerised according to some embodiments. Thus, in some embodiments, the processing circuitry 52 may be configured to run a container to perform the method described herein in respect of the third entity 50.

Briefly, the processing circuitry 52 of the third entity 50 is configured to monitor one or more traffic flows between microservices distributed across a plurality of nodes in the network and between which traffic is to be captured during a session.

As illustrated in Figure 5, in some embodiments, the third entity 50 may optionally comprise a memory 54. The memory 54 of the third entity 50 can comprise a volatile memory or a non-volatile memory. In some embodiments, the memory 54 of the third entity 50 may comprise a non-transitory media. Examples of the memory 54 of the third entity 50 include, but are not limited to, a random access memory (RAM), a read only memory (ROM), a mass storage media such as a hard disk, a removable storage media such as a compact disk (CD) or a digital video disk (DVD), and/or any other memory.

The processing circuitry 52 of the third entity 50 can be connected to the memory 54 of the third entity 50. In some embodiments, the memory 54 of the third entity 50 may be for storing program code or instructions which, when executed by the processing circuitry 52 of the third entity 50, cause the third entity 50 to operate in a manner described herein in respect of the third entity 50. For example, in some embodiments, the memory 54 of the third entity 50 may be configured to store program code or instructions that can be executed by the processing circuitry 52 of the third entity 50 to cause the third entity 50 to operate in accordance with the method described herein in respect of the third entity 50. Alternatively or in addition, the memory 54 of the third entity 50 can be configured to store any information, data, messages, requests, responses, indications, notifications, signals, or similar, that are described herein. The processing circuitry 52 of the third entity 50 may be configured to control the memory 54 of the third entity 50 to store information, data, messages, requests, responses, indications, notifications, signals, or similar, that are described herein.

In some embodiments, as illustrated in Figure 5, the third entity 50 may optionally comprise a communications interface 56. The communications interface 56 of the third entity 50 can be connected to the processing circuitry 52 of the third entity 50 and/or the memory 54 of third entity 50. The communications interface 56 of the third entity 50 may be operable to allow the processing circuitry 52 of the third entity 50 to communicate with the memory 54 of the third entity 50 and/or vice versa. Similarly, the communications interface 56 of the third entity 50 may be operable to allow the processing circuitry 52 of the third entity 50 to communicate with the first entity 30, the second entity 40, and/or any other entity. The communications interface 56 of the third entity 50 can be configured to transmit and/or receive information, data, messages, requests, responses, indications, notifications, signals, or similar, that are described herein. In some embodiments, the processing circuitry 52 of the third entity 50 may be configured to control the communications interface 56 of the third entity 50 to transmit and/or receive information, data, messages, requests, responses, indications, notifications, signals, or similar, that are described herein.

Although the third entity 50 is illustrated in Figure 5 as comprising a single memory 54, it will be appreciated that the third entity 50 may comprise at least one memory (i.e. a single memory or a plurality of memories) 54 that operate in the manner described herein. Similarly, although the third entity 50 is illustrated in Figure 5 as comprising a single communications interface 56, it will be appreciated that the third entity 50 may comprise at least one communications interface (i.e. a single communications interface or a plurality of communications interface) 56 that operate in the manner described herein. It will also be appreciated that Figure 5 only shows the components required to illustrate an embodiment of the third entity 50 and, in practical implementations, the third entity 50 may comprise additional or alternative components to those shown.

**Figure 6** is a flowchart illustrating a method performed by a third entity 50 in accordance with an aspect. The method is for monitoring traffic flows in a network. The third entity 50 described earlier with reference to Figure 5 is configured to operate in accordance with the method of Figure 6. The method can be performed by or under the control of the processing circuitry 52 of the third entity 50

As illustrated at block 500 of Figure 6, one or more traffic flows are monitored between microservices distributed across a plurality of nodes in the network and between which traffic is to be captured during a session. More specifically, the processing circuitry 52 of the third entity 50 monitors the traffic flows between the microservices. In some embodiments, monitoring the one or more traffic flows may be in response to a third request to monitor the one or more traffic flows.

In some embodiments, the traffic to be captured during the session may comprise encrypted traffic. In some of these embodiments, details for decrypting the encrypted traffic during the session may be acquired. More specifically, in some embodiments, the processing circuitry 52 of the third entity 50 can be configured to acquire the details for decrypting encrypted traffic. In some embodiments, the details for decrypting the encrypted traffic may be acquired from one or more of the microservices.

In some embodiments, the method performed by the third entity 50 may comprise initiating transmission of a message towards a second entity. In these embodiments, the message may comprise the details used for decrypting the encrypted traffic. More specifically, in some embodiments, the processing circuitry 52 of the third entity 50 may be configured to transmit (e.g. itself transmit or cause another entity to transmit) the message towards the second entity. In some embodiments, the details for decrypting the encrypted traffic may comprise a private key and/or a pre-master secret key used to encrypt the traffic captured during the session.

Although not illustrated in Figure 6, in some embodiments, the method performed by the third entity 50 may comprise detecting the establishment of traffic flows between one or more of the microservices. More specifically, in some embodiments, the processing circuitry 52 of the third entity 50 may be configured to detect the establishment of traffic flows between one or more of the microservices.

Although also not illustrated in Figure 6, in some embodiments, the method performed by the third entity may comprise, in response to receiving unencrypted traffic from one or more of the microservices, initiating transmission of the traffic towards another one or more of the microservices. More specifically, in some embodiments, the processing circuitry 52 of the third entity 50 may be configured to initiate transmission of (e.g. itself transmit or cause another entity to transmit) the unencrypted traffic towards another one or more of the microservices. In some embodiments, the transmission of the unencrypted traffic may be over an encrypted traffic flow.

In some embodiments, one or more of the plurality of nodes in the network may comprise the third entity 50.

There is also provided a system. The system is for capturing and/or monitoring traffic in a network. The system can comprise one or more first entities 30 as described herein, one or more second entities 40 as described herein, and/or one or more third entities 50 as described herein. A method performed by the system can thus comprise the method described herein in respect of the first entity 30, the method described herein in respect of the second entity 40, and/or the method described herein in respect of the third entity 50.

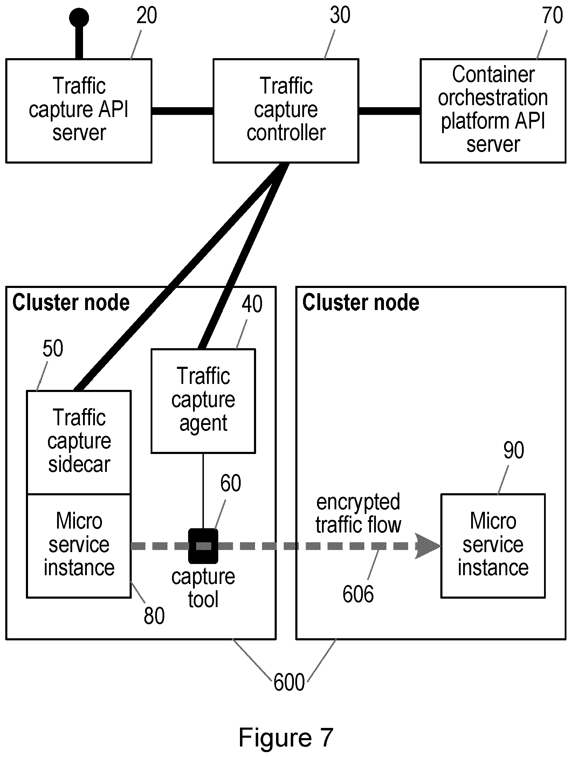

**Figure** 7 illustrates such a system in accordance with an embodiment. In some embodiments, the system illustrated in Figure 7 may be an orchestration platform, such as a container orchestration platform (COP). The system can be based on Kubernetes. A person skilled in the art will appreciate that other system architectures are also possible. For example, the system may be adapted to other COPs.

In the illustrated embodiment of Figure 7, the system comprises the first entity (e.g. a traffic capture controller) 30 described herein, the second entity (e.g. a traffic capture agent) 40 described herein, and the third entity (e.g. a traffic capture sidecar) 50 described herein. As illustrated in Figure 7, the first entity 30 can be configured to communicate with the second entity 40 and/or the third entity 50. Similarly, the second entity 40 and/or the third entity 50 can be configured to communicate with the first entity 30. The first entity 30 can be configured to operate in the manner described earlier in respect of the first entity 30, the second entity 40 can be configured to operate in the manner described earlier in respect of the second entity 40, and/or the third entity 50 can be configured to operate in the manner described earlier in respect of the third entity 50.

In some embodiments, the second entity 40 may be deployed in each of the plurality of nodes, e.g. in each node of a cluster. The second entity 40 may communicate with the first entity 30 to receive traffic capture commands and provide traffic capture results. As illustrated in Figure 7, the second entity 40 can communicate with the tool (e.g. capture tool) 60 referred to herein. The second entity 40 may operate the capture tool in one or more of the plurality of nodes to capture traffic. A person skilled in the art will be aware of various examples of (capture) tools, which may include common software applications, that can be used for the tool 60 referred to herein.

In some embodiments, the third entity 50 may be deployed with each microservice, or each microservice instance. In some embodiments, the third entity 50 may be realised as a container. However, depending on the system capabilities, it can be a different process type. In a Kubernetes based system embodiment, the microservice and the third entity 50 may both be realized as containers. In some of these embodiments, the microservice 80 and the third entity 50 may be deployed and (e.g. lifecycle) managed together, e.g. as a single group of microservices sharing resources. The third entity 50 may be able to extract a private key or a pre-master secret for each connection in which a microservice (or microservice instance) participates according to some embodiments.

As illustrated in Figure 7, in some embodiments, the system may comprise a fourth entity 20. The fourth entity 20 may, for example, be a server, such as an application programming interface (API) server, which may also be referred to as a traffic capture API server. As illustrated in Figure 7, the first entity 30 can be configured to communicate with the fourth entity 20 and vice versa. The fourth entity 20 can provide an interface for operating the traffic capture service described herein. For example, the fourth entity 20 may expose an interface, such as a representational state transfer (REST)-based interface, a Graphical User Interface (GUI), or similar. Although the fourth entity 20 and the first entity 30 are illustrated as separate entities in the embodiment of Figure 7, it will be appreciated that the fourth entity 20 and the first entity 30 may be a single entity according to other embodiments. That is, in some embodiments, the functionality described herein in respect of the fourth entity 20 and the first entity 30 may be performed by a single entity according to some embodiments.

As also illustrated in Figure 7, in some embodiments, the system may comprise a fifth entity 70. The fifth entity 70 may, for example, be a server, such as an orchestration platform API server or a container orchestration platform (COP) API server. A Kubernetes API server is an example of a COP API server. As illustrated in Figure 7, the first entity 30 can be configured to communicate with the fifth entity 70 and vice versa. The fifth entity 70 may expose an interface (e.g. an API) to interact with the system illustrated in Figure 7. In an example where the fifth entity 70 is a Kubernetes API server, the first entity 30 may use a REST-based interface to consume COP API services.

As also illustrated in Figure 7, the system can comprise the plurality (or cluster) of nodes 600 referred to herein across which the microservices 80, 90 described herein are distributed. In some embodiments, as illustrated in Figure 7, it may be instances of a microservice 80, 90 that are distributed across the plurality of nodes 600. Each node of the plurality of nodes 600 may be referred to as a cluster node. As illustrated in Figure 7, a microservice (or microservice instance) 80 on one of the plurality of nodes 600 may transmit traffic 606 towards a microservice (or microservice instance) 90 on another one of the plurality of nodes 600. In some embodiments, the traffic 606 may be an encrypted traffic flow. As illustrated in Figure 7, one or more of the plurality of nodes 600 may comprise the tool 60.

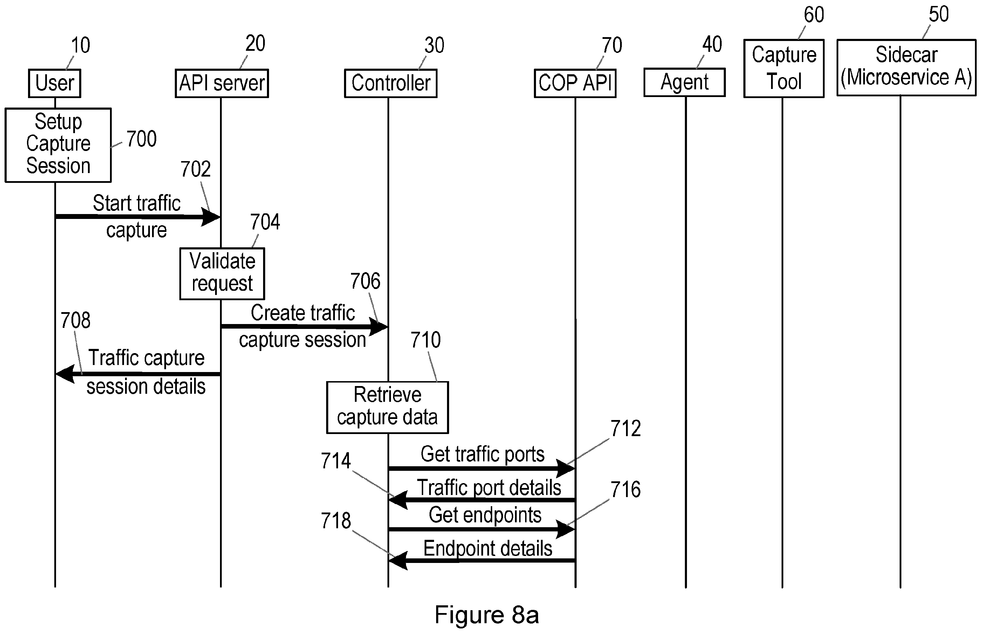

**Figures 8a****-b** is a signalling diagram illustrating an exchange of signals in a system according to an embodiment. More specifically, Figures 8a-b illustrate the creation of a capture session in accordance with an embodiment. The system may be as illustrated in Figure 7 according to some embodiments. The system illustrated in Figures 8a-b comprises a first entity (e.g. controller) 30 as described earlier, a second entity (e.g. agent) 40 as described earlier, and a third entity (e.g. sidecar) 50 as described earlier. The third entity 50 can be associated with a first microservice 80 (which may also be referred to herein as microservice A). The system illustrated in Figures 8a-b also comprises a user (or a user equipment, UE) 10, a fourth entity 20, a fifth entity 70, and a capture tool 60.

In some embodiments, as illustrated by block 700 of Figure 8a, the user (e.g. via a UE) 10 sets up a session in which to capture traffic. For example, in some embodiments, at block 700 of Figure 8a, the user (e.g. via a UE) 10 identifies the traffic that is to be captured. In some embodiments, the user (e.g. via a UE) 10 may include in the request other details, such as a duration for the session in which to capture traffic, a maximum number of packets to capture in the session, etc. As illustrated by arrow 702 of Figure 8a, the user 10 transmits a request towards the fourth entity 20, which is a request to capture traffic between microservices 80, 90 that are distributed across a plurality of nodes 600 in the network.

In some embodiments, as illustrated by block 704 of Figure 8a, the fourth entity 20 may validate the request from the user (e.g. the UE) 10. For example, the validation may comprise authenticating and/or authorizing the user (or the UE) 10. In some embodiments, as illustrated by arrow 706 of Figure 8a, the fourth entity 20 transmits a request to the first entity 30, which is a request to initiate the session in which to capture traffic 606 between microservices. This request is referred to herein as the first request. In some embodiments, as illustrated by arrow 708 of Figure 8a, the fourth entity 20 may transmit a response to the user (e.g. UE), which can comprise details associated with the session in which traffic is to be captured, such as an identifier to be used by the user to refer to the session in subsequent messages.

In some embodiments, as illustrated by block 710 of Figure 8a, the first entity 30 may retrieve the data identifying the traffic 606 that is to be captured. In some embodiments, the one or more capture filters may be generated based on this data. The first entity 30 may generate (or prepare) the one or more capture filters according to some embodiments. In some embodiments, the capture filters may be low-level capture filters (e.g. filters expressed in terms of 5-tuples). As mentioned earlier, the data identifying the traffic 606 that is to be captured may, for example, comprise data identifying the microservices 80, 90 between which the traffic 606 is to be captured, data indicative of the plurality of nodes 600 across which the microservices 80, 90 are distributed, data indicative of one or more ports exposed by the microservices 80, 90 in transmitting the traffic 606 that is to be captured, and/or data indicative of one or more protocols used by the microservices 80, 90 to transmit the traffic 606 that is to be captured.

In some embodiments involving data indicative of one or more ports, the generation of the one or more capture filters may comprise the first entity 30 determining the traffic ports participating in the traffic capture. In some embodiments, as illustrated by arrow 712 of Figure 8a, if port names are to be provided as part of the one or more capture filters, the first entity 30 may query the fifth entity (e.g. COP API server) 70 to obtain the port numbers. As illustrated by arrow 714 of Figure 8a, the fifth entity (e.g. COP API) 70 may provide the port numbers (e.g. corresponding to the port names of the microservices 80, 90). In these embodiments, the first entity 30 may use that information to create a port number (and protocol) part of the one or more (e.g. low-level) capture filters.

In some embodiments involving data identifying the microservices 80, 90, the generation of the one or more capture filters may comprise the first entity 30 determining the microservices (or microservice instances) participating in the traffic capture. In some embodiments, as illustrated by arrow 716 of Figure 8a, if microservice type names or microservice instance names are provided as part of the one or more capture filters, the first entity 30 may query the fifth entity (e.g. COP API server) 70 to obtain the microservice (or microservice instance) details. As illustrated by arrow 718 of Figure 8a, the fifth entity (e.g. COP API) 70 may provide the microservice details. In these embodiments, the first entity 30 may use the provided information to, for example, extract the addresses (e.g. IP addresses) of the microservices (or microservice instances) to create an addresses part of the one or more (e.g. low-level) capture filters, and/or extract the node each microservice (or microservice instance) is running in order to determine the second entity (e.g. agent) 40 to contact.

In some embodiments, as part of the steps illustrated by arrows 712 and 714 of Figure 8a, the first entity 30 may create a subscription in the fifth entity (e.g. COP API) to be notified whenever the microservice (or microservice instance) information changes (e.g. due to scaling or termination of microservices, or relocation between nodes of the plurality of nodes). This enables the first entity 30, upon receiving such a notification, to update the capture filters during the session in which traffic is captured. This update can be performed automatically according to some embodiments. In some embodiments, the update may, for example, comprise adding or removing (IP) addresses and/or port numbers, as the runtime state of the plurality of nodes evolves. Thus, in some embodiments, in response to a change to the data identifying the traffic 606 that is to be captured, the first entity 30 may update the one or more capture filters based on the changed data.

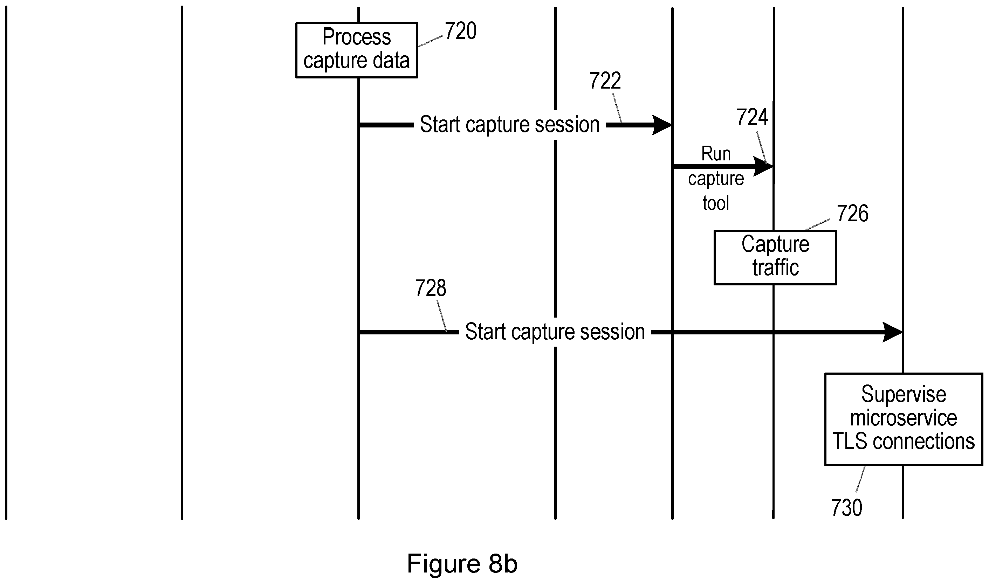

The first entity 30 can thus collect data identifying the traffic 606 that is to be captured and, as illustrated at block 720 of Figure 8b, process this data to generate the one or more (e.g. low-level) capture filters according to some embodiments. In some embodiments, the first entity 30 may distribute the one or more capture filters among the different second entities (e.g. agents) 40 involved. As illustrated by arrow 722 of Figure 8b, one or more second entities initiate transmission of a request to control a tool (or capture tool) 60 in one or more of the plurality of nodes 600 using the one or more capture filters to capture the traffic 606 between the microservices 80, 90. This request is referred to herein as the fifth request. For example, for each second entity (e.g. agent) 40, the first entity 30 may transmit a start capture session request message comprising the (e.g. low-level) capture filters applicable to it.

As illustrated by arrow 724 of Figure 8b, the one or more second entities (e.g. agents) execute the tool 60 using the (e.g. low-level) filters as parameters. As illustrated by arrow 726 of Figure 8b, traffic is captured by the tool 60. More specifically, traffic matching the filters is captured by the tool 60.

In some embodiments, as illustrated by arrow 728 of Figure 8b, the first entity 30 may initiate transmission of a request towards one or more (e.g. each) third entities (e.g. sidecars) 50, where the request is a request that the one or more third entities 50 monitor traffic flows between the microservices 80, 90 during the session. This request is referred to herein as the third request. For example, the third request may instruct the one or more third entities to supervise connections (e.g. TLS connections) created or received by the microservices 80, 90.

As illustrated by block 730 of Figure 8b, in response to the third request to monitor the one or more traffic flows, the one or more third entities 50 monitor one or more traffic flows between microservices 80, 90 distributed across a plurality of nodes 600 in the network and between which traffic 606 is to be captured during a session. In some embodiments, the monitoring of traffic flows may be performed in order to provide details needed for decrypting encrypted traffic. At this point, the setup of the capture session is complete.

In an example involving connections created by microservices, a first microservice (or microservice instance) 80 (hereinafter referred to as "ms A") may create a new connection (e.g. TLS connection) towards a second microservice (or microservice instance) 90 (hereinafter referred to as "ms B"). Either ms A, ms B, or both may be participants of an existing session in which traffic is captured. Depending on the implementation of the connections in the different microservices, different modes of operation may be possible. In one mode of operation, the microservices may natively implement the protection of connections (e.g. with TLS), an example of which will be described with reference to **Error! Reference source not found..** In another mode of operation, the microservices may delegate the protection of connections (e.g. with TLS) to a third entity (e.g. sidecar) 50, an example of which will be described with reference to **Error! Reference source not found..**

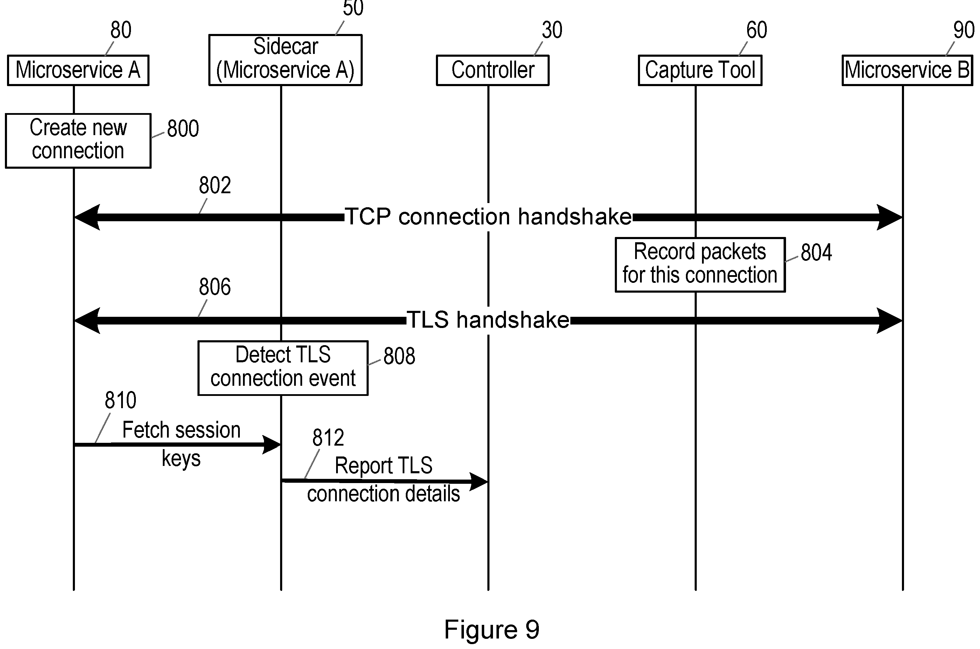

**Figure 9** is a signalling diagram illustrating an exchange of signals in a system according to an embodiment. More specifically, Figure 9 illustrates traffic capture of connections, such as transmission control protocol (TCP) connections, user datagram protocol (UDP) connections, transport layer security (TLS) connections and/or datagram transport layer security (DTLS) connections, in accordance with an embodiment. The system may be as illustrated in Figure 7 according to some embodiments. The system illustrated in Figure 9 comprises a first entity (e.g. controller) 30 as described earlier and a third entity (e.g. sidecar) 50 as described earlier. The system illustrated in Figure 9 also comprises a first microservice 80 (which will be referred to as "ms A"), a capture tool 60, and a second microservice 90 (which will be referred to as "ms B"). The third entity 50 can be associated with the first microservice 80.

As illustrated by block 800 of Figure 9, ms A may open a connection towards ms B. In some embodiments, the connection may be a transmission control protocol (TCP) connection or a user datagram protocol (UDP) connection. As illustrated by arrow 802 of Figure 9, ms A may complete a (e.g. TCP) connection handshake with ms B. As illustrated by block 804 of Figure 9, the tool (or capture tool) 60 can capture (and may record) the traffic for the handshake. As illustrated by arrow 806 of Figure 9, a (e.g. TLS) handshake for securing the traffic may take place between ms A and ms B.

Once this handshake is completed, as illustrated by block 808 of Figure 9, the third entity (e.g. sidecar) 50 associated with ms A may detect establishment of traffic flows between ms A and ms B. For example, the third entity (e.g. sidecar) 50 associated with ms A may detect the new (e.g. TLS) connection. In order to perform this detection, the third entity 50 may supervise traces generated by a (e.g. TLS) library used by ms A, such as by configuring the library to emit such traces. Among the tracing data, and depending on the configuration, as illustrated by arrow 810 of Figure 9, the third entity 50 may acquire details for decrypting the encrypted traffic captured during the session. For example, the third entity 50 may extract a private key of ms A used for the handshake illustrated by arrow 806, a pre-master secret used to derive a symmetric session key, or both.

As illustrated by arrow 812 of Figure 9, the third entity 50 may initiate transmission of a message towards the first entity 30. The message can comprise the details for decrypting the encrypted traffic captured during the session and/or details of the new (e.g. TLS) connection to the first entity 30. These details may, for example, comprise an identity of the connection (e.g. a connection 5-tuple), a timestamp for the connection, and/or the private key and/or pre-master secret mentioned earlier. From this point, the tool 60 may capture (and optionally also record) the traffic pertaining to the (e.g. TLS) connection between ms A and ms B.

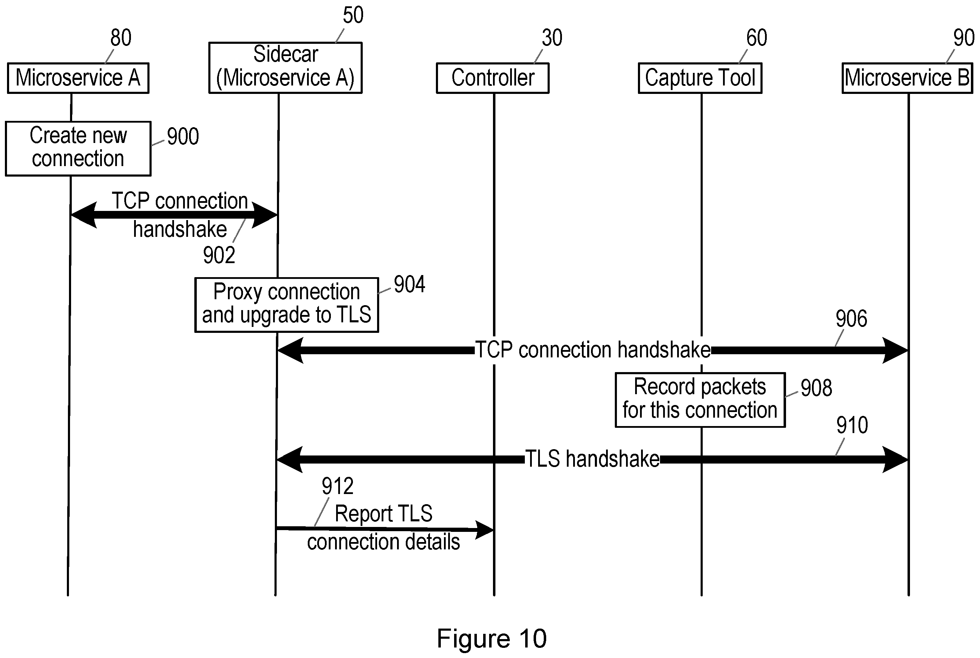

**Figure 10** is a signalling diagram illustrating an exchange of signals in a system according to an embodiment. More specifically, Figure 10 illustrates traffic capture of connections, such as transmission control protocol (TCP) connections, user datagram protocol (UDP) connections, transport layer security (TLS) connections and/or datagram transport layer security (DTLS) connections, in accordance with an embodiment. The system may be as illustrated in Figure 7 according to some embodiments. The system illustrated in Figure 10 comprises a first entity (e.g. controller) 30 as described earlier and a third entity (e.g. sidecar) 50 as described earlier. The system illustrated in Figure 10 also comprises a first microservice 80 (which will be referred to as "ms A"), a capture tool 60, and a second microservice 90 (which will be referred to as "ms B"). The third entity 50 can be associated with the first microservice.

As illustrated by block 900 of Figure 10, ms A may open a regular (e.g. non-TLS) connection towards ms B (e.g. a TCP connection). As illustrated by arrow 902 of Figure 10, the third entity (e.g. sidecar) 50 can intercept this connection and complete the (e.g. TCP) connection handshake. As illustrated by block 904 of Figure 10, the third entity 50 may proxy the connection to ms B. As illustrated by arrow 906 of Figure 10, the third entity 50 can complete a (e.g. TCP) connection handshake with ms B. For example, in response to receiving unencrypted traffic from ms A as part of the connection handshake illustrated by arrow 902 of Figure 10, the third entity 50 may initiate transmission of the traffic towards ms B. This transmission may be over an encrypted traffic flow.

As illustrated by block 908 of Figure 10, the tool (or capture tool) 60 captures (and optionally also records) the traffic for the connection handshake. As illustrated by arrow 910 of Figure 10, the third entity 50 may perform a (e.g. TLS) handshake on the proxied connection. Once this handshake is complete, as illustrated by arrow 912 of Figure 10, the third entity 50 may initiate transmission of a message towards the first entity 30. The message can comprise the details for decrypting the encrypted traffic captured during the session and/or details of the proxied (e.g. TLS) connection to the first entity 30. These details may, for example, comprise an identity of the connection (e.g. a connection 5-tuple), a timestamp for the connection, and/or a private key and/or pre-master secret for decrypting the encrypted traffic. From this point, the tool 60 may capture (and optionally also record) the traffic pertaining to the (e.g. TLS) connection between ms A and ms B.

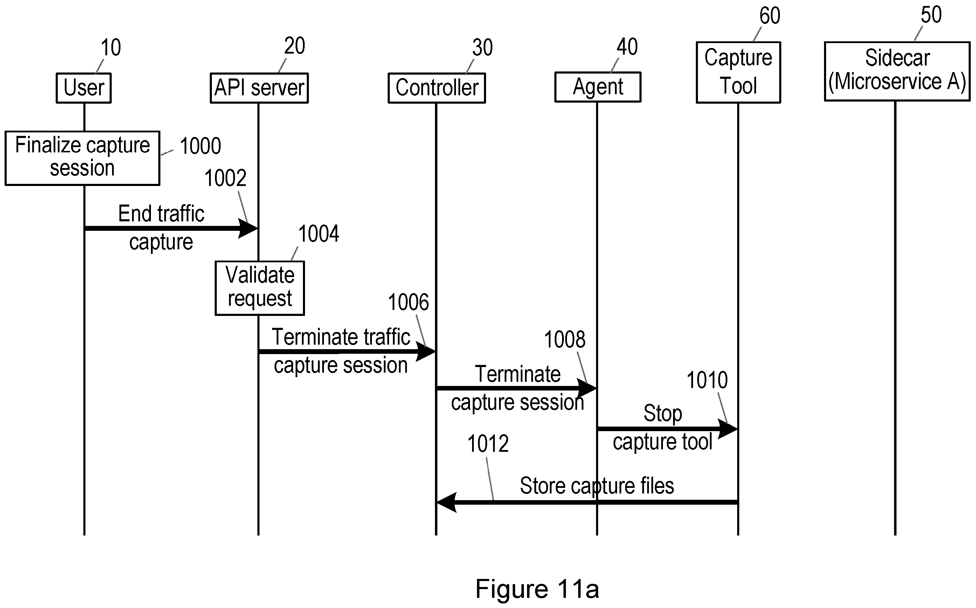

**Figures 11a****-b** is a signalling diagram illustrating an exchange of signals in a system according to an embodiment. More specifically, Figures 11a-b illustrate the finalisation of a capture session in accordance with an embodiment. The system may be as illustrated in Figure 7 according to some embodiments. The system illustrated in Figure 11a-b comprises a first entity (e.g. controller) 30 as described earlier, a second entity (e.g. an agent) 40 as described earlier and a third entity (e.g. sidecar) 50 as described earlier. The system illustrated in Figure 11a-b also comprises a user (e.g. a UE) 10, a fourth entity (e.g. an API server) 20, and a capture tool 60. The third entity 50 can be associated with a first microservice 80.

As illustrated by block 1000 of Figure 11a, the user (e.g. via the UE) 10 may indicate that an ongoing capture session can be finalised. As illustrated by arrow 1002 of Figure 11a, the user (e.g. the UE) 10 may transmit a request to end traffic capture to the fourth entity 20. As illustrated by block 1004 of Figure 11a, the fourth entity 20 can validate the request. As illustrated by arrow 1006 of Figure 11a, the fourth entity 20 may transmit a request (which is referred to herein as the fourth request) to terminate the capture of traffic to the first entity 30. The first entity 30 thus receives this request.

The first entity 30 can identify the one or more second entities 40 participating in the capture session. As illustrated by arrow 1008 of Figure 11a, the first entity 30 may transmit the request (which is referred to herein as the fourth request) to terminate the capture of traffic to each of the one or more second entities 40. Thus, the (fourth) request to terminate the capture of traffic may be transmitted towards the one or more second entities 40 via the first entity 30. As illustrated by arrow 1010 of Figure 11a, the one or more second entities 40 initiate transmission of a request (which is referred to herein as the sixth request) to control the tool 60 in the one or more of the plurality of nodes 600 to terminate the capture of the traffic 606 between the microservices. Thus, each of the one or more second entities 40 can stop the tool 60 in this way. In some embodiments, the one or more second entities 40 may fetch any generated capture files. In some of these embodiments, the first entity 30 may (e.g. securely) transfer the generated capture files to the first entity 30. As illustrated by arrow 1012 of Figure 11a, in some embodiments, the first entity 30 may store the generated capture files.

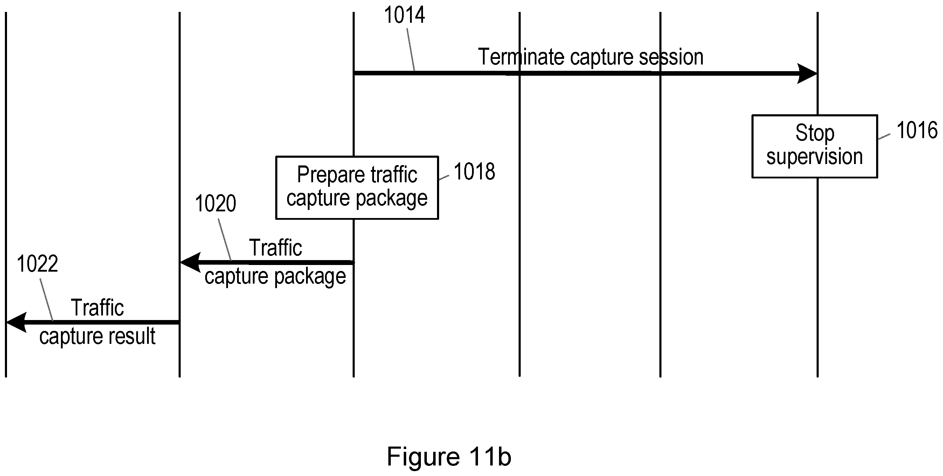

As illustrated by arrow 1014 of Figure 11b, the first entity 30 may initiate transmission of a request to terminate the capture of traffic to each of the third entities 50 participating in the capture session. As illustrated by block 1016 of Figure 11b, each third entity 50 can stop monitoring one or more traffic flows between microservices, e.g. stop supervising the setup of (e.g. TLS) connections for the capture session.

As illustrated by block 1018 of Figure 11b, the first entity 30 can generate information associated with the traffic captured between the microservices during the session. For example, the first entity 30 can create a traffic capture package. Examples of the information that may be generated include, but are not limited to, files to provide (e.g. human-readable) names for microservices, microservice instances, and traffic ports, or a link to a downloadable file containing all those files, files to provide private keys and/or pre-master secrets of all (e.g. TLS) connections captured or a link to a downloadable file containing all those files, traffic capture files or a link to a downloadable file containing all those files. In some embodiments, the first entity 30 may merge all traffic files into a single file. The first entity 30 may, for example, use a timestamp and 5-tuple attribute of each captured packet of the traffic to remove duplicates and/or order them.

As illustrated by arrow 1020 of Figure 11b, the first entity 30 may initiate transmission of a message to the fourth entity 20. The message can comprise information associated with the traffic captured between the microservices during the session. For example, where a traffic capture package is created, the first entity 30 may send the created package to the fourth entity 20. As illustrated by arrow 1022 of Figure 11b, the fourth entity 20 may, in turn, initiate transmission of the message (e.g. the created package) to the user (e.g. the UE) 10. The message may be referred to as a traffic capture result response.

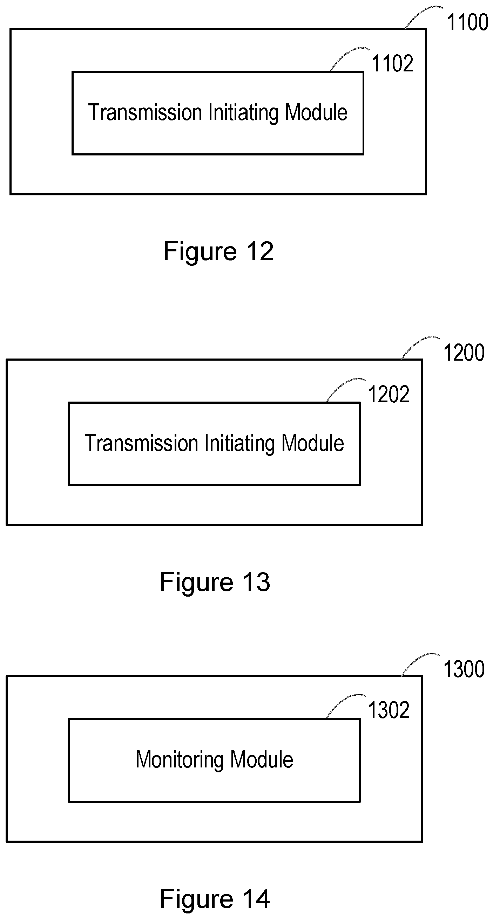

**Figure 12** is a block diagram illustrating a first entity 1100 in accordance with an embodiment. The first entity 1100 comprises a transmission initiating module 1102 configured to, in response to a first request to initiate a session in which to capture traffic between microservices, initiate transmission of a second request towards one or more second entities. The second request is a request that the one or more second entities initiate the session and the second request comprises one or more capture filters generated for use by the one or more second entities to capture the traffic between the microservices. The microservices are distributed across a plurality of nodes in a network. The first entity 1100 may operate in the manner described herein in respect of the first entity.

**Figure 13** is a block diagram illustrating a second entity 1200 in accordance with an embodiment. The second entity 1200 comprises a transmission initiating module 1202 configured to, in response to a second request to start a session in which to capture traffic between microservices, initiate transmission of a fifth request to control a tool in one or more of a plurality of nodes in a network using one or more capture filters to capture the traffic between the microservices. The microservices are distributed across the plurality of nodes in the network and the second request comprises the one or more capture filters generated for use in capturing the traffic between the microservices. The second entity 1200 may operate in the manner described herein in respect of the second entity.

**Figure 14** is a block diagram illustrating a third entity 1300 in accordance with an aspect. The third entity 1300 comprises a monitoring module 1302 configured to monitor one or more traffic flows between microservices distributed across a plurality of nodes in a network and between which traffic is to be captured during a session. The third entity 1300 may operate in the manner described herein in respect of the third entity.

There is also provided a computer program comprising instructions which, when executed by processing circuitry (such as the processing circuitry 32 of the first entity 30 described earlier, the processing circuitry 42 of the second entity 40 described earlier, and/or the processing circuitry 52 of the third entity 50 described earlier), cause the processing circuitry to perform at least part of the method described herein. There is provided a computer program product, embodied on a non- transitory machine-readable medium, comprising instructions which are executable by processing circuitry (such as the processing circuitry 32 of the first entity 30 described earlier, the processing circuitry 42 of the second entity 40 described earlier, and/or the processing circuitry 52 of the third entity 50 described earlier) to cause the processing circuitry to perform at least part of the method described herein. There is provided a computer program product comprising a carrier containing instructions for causing processing circuitry (such as the processing circuitry 32 of the first entity 30 described earlier, the processing circuitry 42 of the second entity 40 described earlier, and/or the processing circuitry 52 of the third entity 50 described earlier) to perform at least part of the method described herein. In some embodiments, the carrier can be any one of an electronic signal, an optical signal, an electromagnetic signal, an electrical signal, a radio signal, a microwave signal, or a computer-readable storage medium.

In some embodiments, the first entity functionality, the second entity functionality, and/or the third entity functionality described herein can be performed by hardware. Thus, in some embodiments, any one or more of the first entity 30, the second entity 40, and the third entity 50 described herein can be a hardware node. However, it will also be understood that optionally at least part or all of the first entity functionality, the second entity functionality, and/or the third entity functionality described herein can be virtualized. For example, the functions performed by any one or more of the first entity 30, the second entity 40, and the third entity 50 described herein can be implemented in software running on generic hardware that is configured to orchestrate the node functionality. Thus, in some embodiments, the any one or more of the first entity 30, the second entity 40, and the third entity 50 described herein can be a virtual node. In some embodiments, at least part or all of the first entity functionality, the second entity functionality, and/or the third entity functionality described herein may be performed in a network enabled cloud. The first entity functionality, the second entity functionality, and/or the third entity functionality described herein may all be at the same location or at least some of the node functionality may be distributed.

It will be understood that at least some or all of the method steps described herein can be automated. That is, at least some or all of the method steps described herein can be performed automatically.

Thus, in the manner described herein, there is advantageously provided a technique for capturing and/or monitoring traffic flow in a network. The technique can, for example, provide a (e.g. automated) traffic capture service to selectively capture (e.g. encrypted) traffic flows. The technique can also provide additional data (e.g. metadata) required to effectively analyse traffic, e.g. with regard to application monitoring and troubleshooting. In some embodiments, the technique can provide an (e.g. automated) traffic capture service. The technique can remove, from the service user, the complexity associated with capturing and analysing encrypted traffic data in a highly distributed, dynamic, and massively scalable container orchestration platform. The technique can be used in cloud native applications as well as others.

It should be noted that the above-mentioned embodiments illustrate rather than limit the idea, and that those skilled in the art will be able to design many alternative embodiments without departing from the scope of the appended claims. The word "comprising" does not exclude the presence of elements or steps other than those listed in a claim, "a" or "an" does not exclude a plurality, and a single processor or other unit may fulfil the functions of several units recited in the claims. Any reference signs in the claims shall not be construed so as to limit their scope.

## Claims

1. A method for use in capturing traffic in a network, the method performed by a first entity (30), the method comprising:
in response to a first request (706) to initiate a session in which to capture traffic (606) between microservices (80, 90), wherein the microservices (80, 90) are distributed across a plurality of nodes (600) in the network:
initiating transmission (300) of a second request (722) towards one or more second entities (40), wherein the second request (722) is a request that the one or more second entities (40) initiate the session and the second request (722) comprises one or more capture filters generated for use by the one or more second entities (40) to capture the traffic (606) between the microservices (80, 90).

2. A method as claimed in claim 1, the method comprising:
generating the one or more capture filters for use by the one or more second entities (40), wherein the one or more capture filters are generated based on data identifying the traffic (606) that is to be captured.

3. A method as claimed in claim 2, wherein:
the first request (706) comprises the data identifying the traffic to be captured.

4. A method as claimed in claim 2 or 3, the method comprising:
in response to a change to the data identifying the traffic (606) that is to be captured, updating the one or more capture filters based on the changed data.

5. A method as claimed in claim 4, the method comprising:
initiating transmission of the one or more updated capture filters towards the one or more second entities for use by the one or more second entities (40) to capture the traffic (606) between the microservices (80, 90).

6. A method as claimed in any of claims 2 to 5, wherein:
the data identifying the traffic (606) that is to be captured comprises:
data identifying the microservices (80, 90) between which the traffic (606) is to be captured;
data indicative of the plurality of nodes (600) across which the microservices (80, 90) are distributed;
data indicative of one or more ports exposed by the microservices (80, 90) in transmitting the traffic (606) that is to be captured; and/or
data indicative of one or more protocols used by the microservices (80, 90) to transmit the traffic (606) that is to be captured.

7. A method as claimed in any of the preceding claims, the method comprising:
initiating transmission of a third request (728) towards one or more third entities (50), wherein the third request (728) is a request that the one or more third entities (50) monitor traffic flows between the microservices (80, 90) during the session;
in response to a fourth request (1006) to terminate the capture of traffic, acquiring, from the one or more second entities (40), the traffic captured between the microservices (80, 90) during the session; and/or
initiating transmission of a message (1020), wherein the message comprises information associated with the traffic captured between the microservices (80, 90) during the session.

8. A method as claimed in claim 7, wherein:
the information associated with the traffic captured between the microservices (80, 90) during the session comprises at least one of:
the traffic captured between the microservices (80, 90) during the session;
one or more keys used to encrypt the traffic captured between the microservices (80, 90) during the session;
one or more references or links for downloading the traffic captured between the microservices (80, 90) during the session;
information identifying the microservices (80, 90) between which the traffic is captured during the session;
information identifying one or more instances of the microservices (80, 90) between which the traffic is captured during the session; and
one or more ports exposed by the microservices (80, 90) in transmitting the traffic captured during the session.

9. A method as claimed in any of the preceding claims, wherein:
the traffic (606) to be captured during the session comprises encrypted traffic; and
the method comprises:
acquiring (812), from one or more third entities (50), details for decrypting the encrypted traffic.

10. A method as claimed in claim 9, wherein:
the details comprise a private key and/or a pre-master secret key used to encrypt the traffic captured during the session.

11. A first entity (30) comprising:
processing circuitry (32) configured to operate in accordance with any of claims 1 to 10.

12. A method for capturing traffic in a network, the method performed by a second entity (40), the method comprising:
in response to a second request (722) to start a session in which to capture traffic (606) between microservices (80, 90), wherein the microservices (80, 90) are distributed across a plurality of nodes (600) in the network and the second request (722) comprises one or more capture filters generated for use in capturing the traffic (606) between the microservices (80, 90):
initiating transmission (400) of a fifth request (724) to control a tool (60) in one or more of the plurality of nodes (600) using the one or more capture filters to capture the traffic (606) between the microservices (80, 90).

13. A method as claimed in claim 12, wherein:
in response to a fourth request (1006, 1008) to terminate the session, initiating transmission of a sixth request (1010) to control the tool (60) in the one or more of the plurality of nodes (600) to terminate the capture of the traffic (606) between the microservices (80, 90).

14. A second entity (40) comprising:
processing circuitry (42) configured to operate in accordance claim 12 or 13.

15. A method performed by a system, the method comprising:
the method as claimed in any of claims 1 to 10 performed by one or more first entities (30) of the system; and/or
the method as claimed in claim 12 or 13 performed by one or more second entities (40) of the system; and
monitoring (500, 730), by one or more third entities (50), one or more traffic flows between microservices (80, 90) distributed across a plurality of nodes (600) in the network and between which traffic (606) is to be captured during a session,
particularly wherein monitoring (730) the one or more traffic flows is in response to a third request (728) from one of the one or more first entities (30) to monitor the one or more traffic flows.

16. A system comprising:
one or more first entities (30) as claimed in claim 11; and/or
one or more second entities (40) as claimed in claim 14; and
one or more third entities (50) comprising:
processing circuitry (52) configured to operate in accordance with a method comprising monitoring (500, 730) one or more traffic flows between microservices (80, 90) distributed across a plurality of nodes (600) in the network and between which traffic (606) is to be captured during a session,
particularly wherein monitoring (730) the one or more traffic flows is in response to a third request (728) from one of the one or more first entities (30) to monitor the one or more traffic flows.

17. A computer program comprising instructions which, when executed by processing circuitry, cause the processing circuitry to perform the method according to any of claims 1 to 10, and/or claim 12 or 13.

## Patentansprüche

1. Verfahren zum Verwenden beim Erfassen von Verkehr in einem Netzwerk, wobei das Verfahren durch eine erste Entität (30) durchgeführt wird, wobei das Verfahren Folgendes umfasst:
als Reaktion auf eine erste Anforderung (706), um eine Sitzung zu initiieren, in der Verkehr (606) zwischen Microservices (80, 90) zu erfassen ist, wobei die Microservices (80, 90) über eine Vielzahl von Knoten (600) in dem Netzwerk verteilt sind:
Initiieren einer Übertragung (300) einer zweiten Anforderung (722) in Richtung einer oder mehrerer zweiter Entitäten (40), wobei die zweite Anforderung (722) eine Anforderung ist, dass die eine oder die mehreren zweiten Entitäten (40) die Sitzung initiieren, und die zweite Anforderung (722) ein oder mehrere Erfassungsfilter umfasst, die zum Verwenden durch die eine oder die mehreren zweiten Entitäten (40) erzeugt werden, um den Verkehr (606) zwischen den Microservices (80, 90) zu erfassen.

2. Verfahren nach Anspruch 1, wobei das Verfahren Folgendes umfasst:
Erzeugen des einen oder der mehreren Erfassungsfilter zum Verwenden durch die eine oder die mehreren zweiten Entitäten (40), wobei das eine oder die mehreren Erfassungsfilter basierend auf Daten erzeugt werden, die den Verkehr (606), der zu erfassen ist, identifizieren.

3. Verfahren nach Anspruch 2, wobei:
die erste Anforderung (706) die Daten umfasst, die den Verkehr, der zu erfassen ist, identifizieren.

4. Verfahren nach Anspruch 2 oder 3, wobei das Verfahren Folgendes umfasst:
als Reaktion auf eine Änderung der Daten, die den Verkehr (606), der zu erfassen ist, identifizieren, Aktualisieren des einen oder der mehreren Erfassungsfilter basierend auf den geänderten Daten.

5. Verfahren nach Anspruch 4, wobei das Verfahren Folgendes umfasst:
Initiieren einer Übertragung des einen oder der mehreren aktualisierten Erfassungsfilter in Richtung der einen oder der mehreren zweiten Entitäten zum Verwenden durch die eine oder die mehreren zweiten Entitäten (40), um den Verkehr (606) zwischen den Microservices (80, 90) zu erfassen.

6. Verfahren nach einem der Ansprüche 2 bis 5, wobei:
die Daten, die den Verkehr (606), der zu erfassen ist, identifizieren, Folgendes umfassen:
Daten, die die Microservices (80, 90) identifizieren, zwischen denen der Verkehr (606) zu erfassen ist;
Daten, die die Vielzahl von Knoten (600) angeben, über die die Microservices (80, 90) verteilt sind;
Daten, die einen oder mehrere Anschlüsse angeben, die durch die Microservices (80, 90) beim Übertragen des Verkehrs (606), der zu erfassen ist, freigelegt werden; und/oder
Daten, die ein oder mehrere Protokolle angeben, die durch die Microservices (80, 90) dazu verwendet werden, den Verkehr (606), der zu erfassen ist, zu übertragen.

7. Verfahren nach einem der vorhergehenden Ansprüche, wobei das Verfahren Folgendes umfasst:
Initiieren einer Übertragung einer dritten Anforderung (728) in Richtung einer oder mehrerer dritter Entitäten (50), wobei die dritte Anforderung (728) eine Anforderung ist, dass die eine oder die mehreren dritten Entitäten (50) Verkehrsströme zwischen den Microservices (80, 90) während der Sitzung überwachen;
als Reaktion auf eine vierte Anforderung (1006), um die Erfassung von Verkehr zu beenden, Erhalten, von der einen oder den mehreren zweiten Entitäten (40), des Verkehrs, der während der Sitzung zwischen den Microservices (80, 90) erfasst wird; und/oder
Initiieren einer Übertragung einer Nachricht (1020), wobei die Nachricht Informationen umfasst, die dem Verkehr zugeordnet sind, der während der Sitzung zwischen den Microservices (80, 90) erfasst wird.

8. Verfahren nach Anspruch 7, wobei:
die Informationen, die dem Verkehr zugeordnet sind, der während der Sitzung zwischen den Microservices (80, 90) erfasst wird, mindestens eines von Folgendem umfassen:
dem Verkehr, der während der Sitzung zwischen den Microservices (80, 90) erfasst wird;
einem oder mehreren Schlüsseln, die dazu verwendet werden, den Verkehr zu verschlüsseln, der während der Sitzung zwischen den Microservices (80, 90) erfasst wird;
einer oder mehreren Referenzen oder Verknüpfungen zum Herunterladen des Verkehrs, der während der Sitzung zwischen den Microservices (80, 90) erfasst wird;
Informationen, die die Microservices (80, 90) identifizieren, zwischen denen der Verkehr während der Sitzung erfasst wird;
Informationen, die eine oder mehrere Instanzen der Microservices (80, 90) identifizieren, zwischen denen der Verkehr während der Sitzung erfasst wird; und
einem oder mehreren Anschlüssen, die durch die Microservices (80, 90) beim Übertragen des Verkehrs, der während der Sitzung erfasst wird, freigelegt werden.

9. Verfahren nach einem der vorhergehenden Ansprüche, wobei:
der Verkehr (606), der während der Sitzung zu erfassen ist, verschlüsselten Verkehr umfasst; und
das Verfahren Folgendes umfasst:
Erhalten (812), von einer oder mehreren dritten Entitäten (50), von Details zum Entschlüsseln des verschlüsselten Verkehrs.

10. Verfahren nach Anspruch 9, wobei:
die Details einen privaten Schlüssel und/oder einen Pre-Master-Secret-Schlüssel umfassen, die dazu verwendet werden, den Verkehr, der während der Sitzung erfasst wird, zu verschlüsseln.

11. Erste Entität (30), umfassend:
einen Verarbeitungsschaltkreis (32), der dazu konfiguriert ist, gemäß einem der Ansprüche 1 bis 10 betrieben zu werden.

12. Verfahren zum Erfassen von Verkehr in einem Netzwerk, wobei das Verfahren durch eine zweite Entität (40) durchgeführt wird, wobei das Verfahren Folgendes umfasst:
als Reaktion auf eine zweite Anforderung (722), um eine Sitzung zu starten, in der Verkehr (606) zwischen Microservices (80, 90) zu erfassen ist, wobei die Microservices (80, 90) über eine Vielzahl von Knoten (600) in dem Netzwerk verteilt sind und die zweite Anforderung (722) ein oder mehrere Erfassungsfilter umfasst, die zum Verwenden beim Erfassen des Verkehrs (606) zwischen den Microservices (80, 90) erzeugt werden:
Initiieren einer Übertragung (400) einer fünften Anforderung (724), um ein Werkzeug (60) in einem oder mehreren der Vielzahl von Knoten (600) unter Verwendung des einen oder der mehreren Erfassungsfilter zu steuern, um den Verkehr (606) zwischen den Microservices (80, 90) zu erfassen.

13. Verfahren nach Anspruch 12, wobei:
als Reaktion auf eine vierte Anforderung (1006, 1008), um die Sitzung zu beenden, Initiieren einer Übertragung einer sechsten Anforderung (1010), um das Werkzeug (60) in dem einen oder den mehreren der Vielzahl von Knoten (600) zu steuern, um die Erfassung des Verkehrs (606) zwischen den Microservices (80, 90) zu beenden.

14. Zweite Entität (40), umfassend:
einen Verarbeitungsschaltkreis (42), der dazu konfiguriert ist, gemäß Anspruch 12 oder 13 betrieben zu werden.

15. Verfahren, das durch ein System durchgeführt wird, wobei das Verfahren Folgendes umfasst:
das Verfahren nach einem der Ansprüche 1 bis 10, das durch eine oder mehrere erste Entitäten (30) des Systems durchgeführt wird; und/oder
das Verfahren nach Anspruch 12 oder 13, das durch eine oder mehrere zweite Entitäten (40) des Systems durchgeführt wird; und Überwachen (500, 730), durch eine oder mehrere dritte Entitäten (50), eines oder mehrerer Verkehrsströme zwischen Microservices (80, 90), die über eine Vielzahl von Knoten (600) in dem Netzwerk verteilt sind und zwischen denen Verkehr (606) während einer Sitzung zu erfassen ist,
wobei insbesondere das Überwachen (730) des einen oder der mehreren Verkehrsströme eine Reaktion auf eine dritte Anforderung (728) von einer der einen oder der mehreren ersten Entitäten (30) ist, um den einen oder die mehreren Verkehrsströme zu überwachen.

16. System, umfassend:
eine oder mehrere erste Entitäten (30) nach Anspruch 11; und/oder
eine oder mehrere zweite Entitäten (40) nach Anspruch 14; und
eine oder mehrere dritte Entitäten (50), umfassend:
einen Verarbeitungsschaltkreis (52), der dazu konfiguriert ist, gemäß einem Verfahren betrieben zu werden, das Überwachen (500, 730) eines oder mehrerer Verkehrsströme zwischen Microservices (80, 90) umfasst, die über eine Vielzahl von Knoten (600) in dem Netzwerk verteilt sind und zwischen denen Verkehr (606) während einer Sitzung zu erfassen ist,
wobei insbesondere das Überwachen (730) des einen oder der mehreren Verkehrsströme eine Reaktion auf eine dritte Anforderung (728) von einer der einen oder der mehreren ersten Entitäten (30) ist, um den einen oder die mehreren Verkehrsströme zu überwachen.

17. Computerprogramm, umfassend Anweisungen, die, wenn sie durch einen Verarbeitungsschaltkreis ausgeführt werden, den Verarbeitungsschaltkreis dazu veranlassen, das Verfahren nach einem der Ansprüche 1 bis 10 und/oder Anspruch 12 oder 13 durchzuführen.

## Revendications

1. Procédé destiné à être utilisé pour capturer du trafic dans un réseau, le procédé étant exécuté par une première entité (30), le procédé comprenant :
en réponse à une première demande (706) d'initiation d'une session dans laquelle est capturé du trafic (606) entre des microservices (80, 90), les microservices (80, 90) étant répartis sur une pluralité de nœuds (600) dans le réseau :
l'initiation de la transmission (300) d'une deuxième demande (722) vers une ou plusieurs deuxièmes entités (40), la deuxième demande (722) étant une demande demandant aux une ou plusieurs deuxièmes entités (40) d'initier la session et la deuxième demande (722) comprenant un ou plusieurs filtres de capture générés pour être utilisés par les une ou plusieurs deuxièmes entités (40) pour capturer le trafic (606) entre les microservices (80, 90).

2. Procédé selon la revendication 1, le procédé comprenant : la génération des un ou plusieurs filtres de capture destinés à être utilisés par les une ou plusieurs deuxièmes entités (40), les un ou plusieurs filtres de capture étant générés sur la base de données identifiant le trafic (606) à capturer.

3. Procédé selon la revendication 2, dans lequel :
la première demande (706) comprend les données identifiant le trafic à capturer.

4. Procédé selon la revendication 2 ou 3, le procédé comprenant :
en réponse à une modification des données identifiant le trafic (606) à capturer, la mise à jour des un ou plusieurs filtres de capture sur la base des données modifiées.

5. Procédé selon la revendication 4, le procédé comprenant :
l'initiation de la transmission des un ou plusieurs filtres de capture mis à jour vers les une ou plusieurs deuxièmes entités destinés à être utilisés par les une ou plusieurs deuxièmes entités (40) pour capturer le trafic (606) entre les microservices (80, 90).

6. Procédé selon l'une quelconque des revendications 2 à 5, dans lequel :
les données identifiant le trafic (606) à capturer comprennent :
des données identifiant les microservices (80, 90) entre lesquels le trafic (606) doit être capturé ;
des données indiquant la pluralité de nœuds (600) sur lesquels les microservices (80, 90) sont distribués ;
des données indiquant un ou plusieurs ports exposés par les microservices (80, 90) lors de la transmission du trafic (606) à capturer ; et/ou
des données indiquant un ou plusieurs protocoles utilisés par les microservices (80, 90) pour transmettre le trafic (606) à capturer.

7. Procédé selon l'une quelconque des revendications précédentes, le procédé comprenant :
l'initiation de la transmission d'une troisième demande (728) vers une ou plusieurs troisièmes entités (50), la troisième demande (728) étant une demande demandant aux une ou plusieurs troisièmes entités (50) de surveiller les flux de trafic entre les microservices (80, 90) pendant la session ;
en réponse à une quatrième demande (1006) de mettre fin à la capture de trafic, l'acquisition, à partir des une ou plusieurs deuxièmes entités (40), du trafic capturé entre les microservices (80, 90) pendant la session ; et/ou
l'initiation de la transmission d'un message (1020), le message comprenant des informations associées au trafic capturé entre les microservices (80, 90) pendant la session.

8. Procédé selon la revendication 7, dans lequel :
les informations associées au trafic capturé entre les microservices (80, 90) pendant la session comprennent au moins l'un des éléments suivants :
le trafic capturé entre les microservices (80, 90) pendant la session ;
une ou plusieurs clés utilisées pour crypter le trafic capturé entre les microservices (80, 90) pendant la session ;
une ou plusieurs références ou liens pour télécharger le trafic capturé entre les microservices (80, 90) pendant la session ;
des informations identifiant les microservices (80, 90) entre lesquels le trafic est capturé pendant la session ;
des informations identifiant une ou plusieurs instances des microservices (80, 90) entre lesquelles le trafic est capturé pendant la session ; et
un ou plusieurs ports exposés par les microservices (80, 90) lors de la transmission du trafic capturé pendant la session.

9. Procédé selon l'une quelconque des revendications précédentes, dans lequel :
le trafic (606) à capturer pendant la session comprend un trafic crypté ; et
le procédé comprend :
l'acquisition (812), auprès d'une ou plusieurs entités tierces (50), de détails pour décrypter le trafic crypté.

10. Procédé selon la revendication 9, dans lequel :
les détails comprennent une clé privée et/ou une clé secrète pré-maîtresse utilisée pour crypter le trafic capturé pendant la session.

11. Première entité (30) comprenant :
un circuit de traitement (32) configuré pour fonctionner conformément à l'une quelconque des revendications 1 à 10.

12. Procédé de capture de trafic dans un réseau, le procédé étant exécuté par une deuxième entité (40), le procédé comprenant :
en réponse à une deuxième demande (722) de démarrage d'une session dans laquelle est capturé du trafic (606) entre des microservices (80, 90), les microservices (80, 90) étant répartis sur une pluralité de nœuds (600) dans le réseau et la deuxième demande (722) comprenant un ou plusieurs filtres de capture générés pour être utilisés dans la capture du trafic (606) entre les microservices (80, 90) :
l'initiation de la transmission (400) d'une cinquième demande (724) pour commander un outil (60) dans un ou plusieurs nœuds de la pluralité de nœuds (600) à l'aide des un ou plusieurs filtres de capture pour capturer le trafic (606) entre les microservices (80, 90).

13. Procédé selon la revendication 12, dans lequel :
en réponse à une quatrième demande (1006, 1008) de fin de session, l'initiation de la transmission d'une sixième demande (1010) pour commander l'outil (60) dans un ou plusieurs nœuds de la pluralité de nœuds (600) pour terminer la capture du trafic (606) entre les microservices (80, 90).

14. Deuxième entité (40) comprenant :
un circuit de traitement (42) configuré pour fonctionner conformément à la revendication 12 ou 13.

15. Procédé réalisé par un système, le procédé comprenant :
le procédé selon l'une quelconque des revendications 1 à 10 réalisé par une ou plusieurs premières entités (30) du système ; et/ou
le procédé selon la revendication 12 ou 13 réalisé par une ou plusieurs deuxièmes entités (40) du système ; et
la surveillance (500, 730), par une ou plusieurs troisièmes entités (50), d'un ou plusieurs flux de trafic entre des microservices (80, 90) répartis sur une pluralité de nœuds (600) dans le réseau et entre lesquels le trafic (606) doit être capturé pendant une session,
en particulier dans lequel la surveillance (730) des un ou plusieurs flux de trafic est en réponse à une troisième demande (728) provenant de l'une des une ou plusieurs premières entités (30) pour surveiller les un ou plusieurs flux de trafic.

16. Système comprenant :
une ou plusieurs premières entités (30) selon la revendication 11 ; et/ou
une ou plusieurs deuxièmes entités (40) selon la revendication 14 ; et
une ou plusieurs troisièmes entités (50) comprenant :
un circuit de traitement (52) configuré pour fonctionner conformément à un procédé comprenant la surveillance (500, 730) d'un ou plusieurs flux de trafic entre des microservices (80, 90) répartis sur une pluralité de nœuds (600) dans le réseau et entre lesquels le trafic (606) doit être capturé pendant une session,
en particulier dans lequel la surveillance (730) des un ou plusieurs flux de trafic est en réponse à une troisième demande (728) provenant de l'une des une ou plusieurs premières entités (30) pour surveiller les un ou plusieurs flux de trafic.

17. Programme informatique comprenant des instructions qui, lorsqu'elles sont exécutées par un circuit de traitement, amènent le circuit de traitement à réaliser le procédé selon l'une quelconque des revendications 1 à 10, et/ou la revendication 12 ou 13.
